(19) Europäisches Patentamt / European Patent Office / Office européen des brevets

(11) **EP 4 030 362 A1**

(12) **DEMANDE DE BREVET EUROPEEN**

(43) Date de publication:
**20.07.2022 Bulletin 2022/29**

(21) Numéro de dépôt: **22150468.1**

(22) Date de dépôt: **06.01.2022**

(51) Classification Internationale des Brevets (IPC):
**G06Q 10/02** (2012.01)  **G06Q 10/06** (2012.01)
**G06Q 50/06** (2012.01)  **F17C 5/00** (2006.01)

(52) Classification Coopérative des Brevets (CPC):
**G06Q 10/02; F17C 5/007; G06Q 10/06315; G06Q 50/06**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**
Etats de validation désignés:
**KH MA MD TN**

(30) Priorité: **14.01.2021 FR 2100367**
**09.02.2021 FR 2101221**

(71) Demandeur: **Prodeval SAS**
**26300 Chateauneuf sur Isère (FR)**

(72) Inventeurs:
• **PEYRAT, Eric**
**31100 TOULOUSE (FR)**
• **MARCEL, Charlotte**
**26320 SAINT MARCEL LES VALENCE (FR)**
• **PAOLOZZI, Sébastien**
**26300 SAINT VINCENT LA COMMANDERIE (FR)**

(74) Mandataire: **Argyma**
**14 Boulevard de Strasbourg**
**31000 Toulouse (FR)**

(54) **STATION DE DISTRIBUTION DE GAZ NATUREL COMPRIME POUR VEHICULE**

(57) Station (5) de distribution de Gaz Naturel Comprimé pour véhicules (20-1, 20-2, 20-3), notamment automobiles, ladite station (5) comprenant un module de compression (51) de gaz, un module de stockage (52) et un module de gestion (54) adapté notamment pour calculer la masse de gaz utile pouvant être distribuée aux véhicules (20-1, 20-2, 20-3) à partir de la masse de gaz stocké dans le module de stockage (52) et d'une pression minimale utile supérieure ou égale à la pression maximale admissible dans le réservoir des véhicules (20-1, 20-2, 20-3) associés aux équipements d'utilisateur (10-1, 10-2, 10-3) et pour calculer la masse de gaz distribuable sur chacun des créneaux horaires à partir de la masse de gaz utile calculée et d'une masse de gaz à réserver reçue afin de mettre à jour la masse de gaz distribuable sur chaque créneau horaire.

[Fig 1]

FIGURE 1

EP 4 030 362 A1

**Description**

**[Domaine technique]**

La présente invention se rapporte au domaine de la distribution de carburant pour véhicule et concerne plus particulièrement une station de distribution de carburant gazeux, notamment de Gaz Naturel Comprimé (GNC) ou d'hydrogène, pour véhicule, notamment automobile.

**[Etat de la technique antérieure]**

De nos jours, certains véhicules automobiles, voitures ou poids-lourds, sont munis d'un moteur fonctionnant à partir d'un carburant de type Gaz Naturel Véhicule (GNV) ou hydrogène. Le carburant GNV peut se présenter sous forme liquide, et est alors appelé Gaz Naturel Liquéfié ou GNL, ou sous forme gazeuse en étant comprimé, et est alors appelé Gaz Naturel Comprimé ou GNC.

Dans le cas du GNL, le gaz liquide est stocké en cuve et est délivré aux utilisateurs via une pompe, similairement à la distribution d'essence ou de gazole. Le GNL doit toutefois être stocké à une température très basse, de l'ordre de -160°C, ce qui rend les stations de distributions complexes à fabriquer et installer et particulièrement onéreuses.

Le GNC permet de remédier en partie à ces inconvénients dans la mesure où il peut être produit à partir d'un réseau de distribution de gaz naturel domestique en le comprimant à haute pression à une pression de consigne, par exemple de l'ordre de 300 bars, pour le stocker dans des bouteilles ou des cuves adaptées. Le stockage et la distribution du GNC s'avèrent donc plus aisés et significativement moins onéreux que le stockage et la distribution du GNL. Il en va de même de l'hydrogène. La pression de consigne est choisie de sorte à assurer que la pression du gaz stocké dans les bouteilles est supérieure à la pression maximale de remplissage des réservoirs des véhicules afin de pouvoir transférer, par équilibrage de pression, le gaz des bouteilles de stockage vers le réservoir des véhicules.

Le remplissage d'un gaz sous pression, GNC ou hydrogène, dans un réservoir de véhicule est réalisé dans une station de distribution, aussi appelée station de remplissage. De manière connue, une telle station comprend un module de compression et un module de distribution, et éventuellement un module de stockage. Le module de compression est adapté pour comprimer du gaz, par exemple reçu d'un réseau domestique de gaz naturel dans le cas du GNC, afin de le stocker dans le module de stockage. Le module de stockage comprend une pluralité de bouteilles de stockage adaptées pour contenir, à différentes pressions, du gaz comprimé fourni par le module de compression. Le module de distribution correspond au dispositif qui permet d'assurer le transfert du gaz du module de compression ou du module de stockage vers le réservoir du véhicule. Le module de distribution est par exemple constitué de l'ensemble de mesurage de la quantité de gaz transférée et du système de connexion entre la station et le véhicule (le flexible et pistolet).

Le remplissage rapide, typiquement en moins de 15 minutes, de réservoirs à haute pression (200 bars et au-delà notamment) embarqués à bord des véhicules est réalisé classiquement par des équilibrages de pression successifs entre les bouteilles de stockage. Le remplissage « en cascade » du réservoir du véhicule est classiquement obtenu en réalisant une succession d'équilibrages de pression entre, d'une part, le réservoir cible à remplir et, d'autre part, les bouteilles de stockage. Cette méthode bien connue est décrite abondamment dans la littérature, notamment pour des applications de gaz naturel ou d'hydrogène.

Selon une autre technologie de remplissage connue dite de « remplissage lent », par exemple de durée supérieure à 15 minutes, le gaz est introduit dans le réservoir directement depuis le module de compression. Cette méthode de remplissage par « compression directe » ne permet pas en effet de remplir des réservoirs en moins de 15 minutes sauf à utiliser des compresseurs de tailles très importantes nécessitant des puissances électriques très élevées (de l'ordre par exemple de 70 kW pour une pompe liquide et plus de 300 kW pour un compresseur), ce qui s'avérer complexe et onéreux.

Dans les solutions connues, la distribution de carburant gazeux, aussi bien de GNC que d'hydrogène, est réalisée au fur et à mesure que les véhicules se présentent à la station. Ce faisant, lorsque les bouteilles de stockage se vident, il est nécessaire de les remplir de nouveau au fur et à mesure en comprimant le gaz reçu du réseau afin d'augmenter la masse de gaz stocké. Cependant, le débit de compression s'avérant en principe significativement inférieur au débit de remplissage du réservoir des véhicules, il en résulte que les bouteilles de stockage ne se remplissent pas aussi vite qu'elles se vident lorsque le nombre de véhicules retirant du carburant gazeux en un court laps de temps augmente, ce qui finit par créer des périodes de pénurie de carburant gazeux sur la station qui se traduisent par l'impossibilité de distribuer du carburant gazeux par manque de pression dans les bouteilles de stockage.

Il existe donc un besoin d'une solution simple et efficace permettant de remédier au moins en partie à ces inconvénients.

**[Exposé de l'invention]**

L'un des buts de l'invention est de fournir une solution permettant d'éviter ces périodes de pénurie en assurant la distribution de carburants gazeux (GNC, hydrogène, etc.) à tous les véhicules. Un autre but de l'invention est de rationnaliser la distribution de carburant gazeux à une pluralité de véhicules afin d'éviter les périodes de pénurie de carburant gazeux.

A cette fin, l'invention a tout d'abord pour objet une station de distribution de carburant gazeux, notamment de Gaz Naturel Comprimé ou d'hydrogène, pour véhicules, notamment automobiles, chaque véhicule étant associé à au moins un équipement d'utilisateur, ladite station comprenant :

- un module de compression de gaz adapté pour être relié via son entrée d'aspiration à un réseau de distribution de gaz naturel et pour comprimer le gaz naturel reçu dudit réseau jusqu'à une pression de consigne,

- un module de stockage relié audit module de compression et adapté pour stocker le gaz comprimé à au moins ladite pression de consigne,

- un module de distribution comprenant au moins un distributeur configuré pour remplir le réservoir des véhicules à partir de gaz comprimé fourni par le module de stockage,

- un module de gestion comprenant une zone mémoire dans laquelle est enregistré un tableau de planification dynamique comportant un ensemble de créneaux horaires, chaque créneau horaire étant caractérisé par un identifiant, à une masse de gaz utile et à une masse de gaz distribuable, ledit module de gestion étant configuré pour :

  - recevoir, via un réseau de communication, une requête de planning envoyée par un équipement d'utilisateur pour obtenir le tableau de planification dynamique de la station, ladite requête de planning comprenant l'identifiant dudit équipement d'utilisateur,

  - envoyer à l'équipement d'utilisateur, via ledit réseau de communication, le tableau de planification dynamique de la station, dans lequel chaque créneau horaire est associé à une masse de gaz distribuable sur ledit créneau horaire à cet instant,

  - recevoir, via le réseau de communication, une requête de réservation envoyée par l'équipement d'utilisateur comprenant l'identifiant d'un créneau horaire à réserver et une masse de gaz à réserver, ladite masse de gaz à réserver étant inférieure ou égale à la masse de gaz distribuable sur le créneau horaire,

  - calculer, pour chaque créneau horaire postérieur au créneau horaire réservé, une masse de gaz utile prévisionnelle à partir de la masse de gaz utile du créneau horaire précédant le créneau horaire réservé, de la durée du créneau horaire réservé et du débit de compression du module de compression,

  - mettre à jour le tableau de planification dynamique à partir des masses de gaz utiles prévisionnelles calculées,

  - calculer, pour chaque créneau horaire du tableau de planification dynamique, la masse de gaz distribuable sur chacun des créneaux horaires à partir de la masse de gaz utile prévisionnelle associée audit créneau horaire et de la masse de gaz à réserver reçue,

  - mettre à jour le tableau de planification dynamique à partir des masses de gaz distribuables calculées,

  - lorsque l'utilisateur se présente à la station dans le créneau horaire réservé, identifier sur site l'utilisateur de l'équipement d'utilisateur,

  - distribuer à un véhicule associé à l'équipement d'utilisateur, pendant le créneau horaire réservé, la masse de gaz réservée par l'utilisateur identifié.

La station selon l'invention permet ainsi de gérer l'approvisionnement des véhicules en carburant gazeux par réservation en fonction de la masse de gaz distribuable à un instant donné, déterminée par le module de gestion afin d'optimiser la distribution de carburant gazeux. La station permet notamment de maximiser la masse de gaz distribuée en optimisant le flux de véhicules se présentant sur la station. En réservant des masses de gaz à une pression de distribution suffisante pour garantir le remplissage des réservoirs de véhicule, le module de gestion permet ainsi d'optimiser la masse de gaz distribuée par la station et donc le nombre de véhicules pouvant se présenter à la station, en influençant l'heure de passage des véhicules à la station en leur proposant des créneaux pour lesquels ils ne se seraient a priori pas présentés à la station. D'autres avantages de l'invention apparaîtront dans la description ci-après.

Avantageusement, la station comprend plusieurs distributeurs et la station est configurée pour indiquer à l'utilisateur le numéro de distributeur sur lequel se servir.

Avantageusement encore, la station comprend plusieurs pistes, chaque piste comprenant au moins un distributeur de carburant gazeux afin de pouvoir distribuer du carburant gazeux à plusieurs véhicules simultanément, la station étant configurée pour indiquer à l'utilisateur le numéro de distributeur sur lequel se servir et/ou le numéro de piste sur laquelle se servir.

Le débit du module de compression peut être variable, notamment dans le cas où le module de compression est constitué de plusieurs compresseurs pouvant fonctionner seuls ou en parallèle.

Selon un aspect de l'invention, la durée d'un créneau horaire est une valeur prédéfinie, par exemple de 15 minutes, définie par la somme d'une durée fixe de manœuvre du véhicule à l'arrivée et au départ du distributeur, d'une durée fixe d'opérations de l'utilisateur, notamment pour s'identifier et/ou payer le carburant et d'une durée de distribution du gaz dans le véhicule.

Selon un aspect de l'invention, le module de gestion est configuré pour valider l'identification de l'utilisateur, notamment afin de l'autoriser à remplir son réservoir. Par exemple, la validation peut comprendre la vérification que l'utilisateur se présente sur le créneau qu'il a réservé et/ou que la masse de gaz requise par l'utilisateur est bien distribuable sur le créneau réservé.

Dans une forme de réalisation, le module de gestion est configuré pour valider la requête de réservation avant de réserver la masse de gaz requise dans le tableau de planification dynamique, la validation comprenant par exemple la vérification de l'acceptation du paiement de l'utilisateur.

Le module de gestion peut être configuré pour distribuer à un utilisateur se présentant à la station une masse de gaz non réservée si une telle masse de gaz est distribuable. Une fois la masse de gaz non-réservée distribuable délivrée, le module de gestion calcule de nouveau la masse de gaz distribuable au niveau de la station pour les réservations ultérieures ou pour les distributions ultérieures de gaz non réservé à partir de la masse de gaz réelle utile.

Avantageusement, le module de gestion est configuré pour calculer la masse de gaz utile réelle stockée dans le module de stockage à l'instant courant, pour remplacer la masse de gaz utile prévisionnelle du créneau horaire courant par la masse de gaz utile réelle calculée et pour recalculer automatiquement la masse de gaz utile prévisionnelle pour chaque créneau horaire postérieur à l'instant courant à partir de la valeur de masse de gaz utile réelle affectée à la masse de gaz utile prévisionnelle courante.

De préférence, le module de gestion est configuré pour calculer la masse de gaz utile réelle Mu_réelle (ou Mu(t)) à l'instant courant t0 (pour t=1), notée Mu(1), selon la formule suivante :

[Math 1]

$$Mu(1) = \frac{\bar{M}}{RT}\left[\frac{(Pstock - P_{\min\_utile})}{Z} \cdot V\right]$$

où

[Math 2]

$\bar{M}$ est la masse molaire du gaz comprimé et stocké, R est la constante des gaz parfaits, T est la température du gaz stocké dans le module de stockage, $P_{stock}$ est la pression réelle du gaz stocké dans la bouteille de stockage $P_{min\_utile}$ est une pression prédéterminée qui correspond à la pression utile minimale du module de stockage, cette valeur de pression utile minimale est paramétrable et est supérieure ou égale à la pression maximum admissible dans les réservoirs des véhicules.

Par exemple, pour un module de stockage constitué de trois bouteilles de stockage à trois niveaux de pressions de stockage différents (BP, MP et HP), de volumes respectifs V1, V2 et V3, le module de gestion est configuré pour calculer la masse utile Mu selon la formule suivante :

[Math 3]

$$Mu(1) = \frac{\bar{M}}{RT}\left[\frac{(PstockHP - P_{min\_utile})}{Z_1}\cdot V1 + \frac{(PstockMP - P_{MP})}{Z_2}\cdot V2 + \frac{(PstockBP - P_{BP})}{Z_3}\cdot V3\right]$$

où $P_{stockHP}$ est la pression réelle de la bouteille de stockage à haute pression, $P_{min\_utile}$ est une pression prédéterminée qui correspond à la pression utile minimale du module de stockage (pression supérieure ou égale à la pression maximum admissible dans les réservoirs des véhicules), $P_{stockMP}$ est la pression réelle de la bouteille de stockage à moyenne pression, $P_{MP}$ est la pression d'équilibrage de l'étage de stockage à moyenne pression (valeur paramétrable pour chaque station), $P_{stockBP}$ est la pression réelle de la bouteille de stockage à basse pression, $P_{BP}$ est la pression d'équilibrage de l'étage de stockage à basse pression (valeur paramétrable pour chaque station), $Z_1$ est le coefficient de compressibilité calculé entre $P_{MAX}$ et $P_{stockHP}$, $Z_2$ est le coefficient de compressibilité calculé entre $P_{MP}$ et $P_{stockMP}$, $Z_3$ est le coefficient de compressibilité calculé entre $P_{BP}$ et $P_{stockBP}$.

En cas d'écart entre la masse utile prévisionnelle à l'instant courant et la masse utile réelle de la station au même instant courant, le module de gestion est configuré pour recalculer la masse utile prévisionnelle Mu(t) à partir de la valeur réelle de masse de gaz utile à l'instant t selon la formule ci-avant. Par exemple, a minima à chaque début de créneau, le module de gestion compare la valeur prévisionnelle et la valeur réelle et réaffecte la valeur réelle à la valeur prévisionnelle.

Dans une première forme de réalisation, le module de gestion est configuré pour calculer la masse de gaz utile prévisionnelle Mu(t) pour un créneau horaire débutant à l'instant t, pour t variant de l'instant courant t0 (présent) à un instant futur prédéfini (t+n), est réalisé selon la formule suivante :

$$M_u(t) = M_u(t-1) - M_{tot\_réservée}(t-1) + \Delta t \times Q_{comp}$$

où $M_{tot\_réservée}(t-1)$ correspond à la masse totale de gaz réservée au créneau précédent, débutant à l'instant (t-1), $\Delta t$ correspond à la durée d'un créneau horaire, $Q_{comp}$ correspond au débit du flux de gaz comprimé entrant dans le module de stockage, c'est-à-dire au débit du flux de gaz comprimé par le module de compression, et n est un nombre entier naturel de créneaux horaires paramétrable par l'exploitant de la station (par exemple de sorte que (t+n) soit le dernier créneau horaire du tableau de planification dynamique).

De préférence, le module de gestion est configuré pour calculer la masse de gaz distribuable Md(t) pour un créneau horaire débutant à l'instant t, pour t variant de l'instant courant t0 (présent) à un instant futur prédéfini (t+n), selon la formule suivante:

$$Md(t) = MIN(Mu(t+1 \text{ à } t+n)) - \Delta t \times Q_{comp}$$

où n est un nombre entier naturel de créneaux horaires paramétrable par l'exploitant de la station et MIN est une fonction mathématique qui détermine le minimum des valeurs de masse de gaz utile prévisionnelle sur la plage de temps qui est définie entre (t+1) et (t+n).

Dans une deuxième forme de réalisation, le module de gestion est configuré pour calculer, pour chaque créneau horaire postérieur au créneau horaire réservé, la masse de gaz utile prévisionnelle à partir de la masse de gaz utile du créneau horaire précédant le créneau horaire réservé, de la durée du créneau horaire réservé, du débit de compression du module de compression et de l'état de fonctionnement du module de compression au créneau horaire précédent le créneau horaire réservé.

De préférence, le module de gestion est configuré pour calculer la masse de gaz utile prévisionnelle Mu(t) pour un créneau horaire débutant à l'instant t, pour t variant de 2 (l'instant suivant l'instant courant t0 d'un écart de $\Delta t$) à un instant futur prédéfini n, selon l'algorithme suivant :

- pour t=1 (instant courant t0), Mu(1) est mesurée en continu sur la station, de préférence par les formules ci-avant (Math 1 ou Math 3),

- pour t variant de 2 à n (prévisionnel), si le module de compression de gaz était à l'état de fonctionnement à l'instant précédent (t-1), si [$M_u(t-1) - M_{tot\_réservée}(t-1) + \Delta t \times Q_{comp} > M_{u\_max}$] alors $M_u(t) = M_{u\_max}$ sinon [$M_u(t) = M_u(t-1) - M_{tot\_réservée}(t-1) + \Delta t \times Q_{comp}$], sinon, si le module de compression de gaz était à l'état d'arrêt à l'instant précédent

(t-1) alors [$M_u(t) = M_u(t-1) - M_{tot\_réservée}(t-1)$],

où $M_{tot\_réservée}(t-1)$ correspond à la masse totale de gaz réservée au créneau précédent, débutant à l'instant (t-1), $\Delta t$ correspond à la durée d'un créneau horaire, $Q_{comp}$ correspond au débit du flux de gaz comprimé entrant dans le module de stockage, c'est-à-dire au débit du flux de gaz comprimé par le module de compression, $M_{u\_max}$ est la masse utile maximale qui peut être stockée dans le module de stockage et n est un nombre entier naturel de créneaux horaires paramétrable par l'exploitant de la station (par exemple de sorte que n soit le dernier créneau horaire du tableau de planification dynamique).

Avantageusement, la station donne un ordre de démarrage au module de compression de manière à ce que le compresseur reste en fonctionnement pendant une durée suffisamment longue et à une fréquence suffisamment faible pour ne pas altérer sa durée de vie. Dans ce mode de fonctionnement, l'ordre de démarrage du compresseur correspond à un niveau de pression minimum en-dessous duquel le compresseur peut fonctionner suffisamment longtemps. A cette pression minimale correspond une quantité de gaz stocké minimale, $M_{u\_min}$. Dans ce mode de fonctionnement, l'ordre d'arrêt du compresseur est la pression maximale du module de stockage, à laquelle correspond une quantité maximale de gaz stocké, $M_{u\_max}$. Dans ce mode de fonctionnement, le module de gestion contrôle l'état de fonctionnement du compresseur, pour un créneau horaire débutant à l'instant t, pour t variant de 2 (l'instant suivant l'instant courant t0 d'un écart de $\Delta t$) à un instant futur prédéfini n, selon l'algorithme suivant :

- pour t=1 (instant courant t0), l'état de marche du module de compression est donné par la station (état réel) ;
- pour t variant de 2 à n (prévisionnel), si $Mu(t) > M_{u\_max}$ alors le module de compression est arrêté ou si $Mu(t) < M_{u\_min}$ alors le module de compression est mis en fonctionnement, sinon le module de compression est à l'instant t est gardé dans le même état (fonctionnement/marche ou arrêt).

De préférence, le module de gestion est configuré pour calculer le cumul de la masse maximale théorique délivrée, MM(t), qui représente le cumul de la masse maximale que pourrait délivrer la station avec une capacité de stockage infinie, ou si des véhicules se présentaient en permanence sur la station, pour un créneau horaire débutant à l'instant t, pour t variant de 2 (l'instant suivant l'instant courant t0 d'un écart de $\Delta t$) à un instant futur prédéfini n, selon l'algorithme suivant :

- pour t=1 (instant courant t0), le cumul de la masse maximale théorique délivrée à l'instant courant (t=1) est égale à la masse de gaz utile prévisionnelle audit instant courant : MM(1) = Mu(1) ;

- pour t variant de 2 à n (prévisionnel), on a MM(t) = MM(t-1) + $\Delta t \times Q_{comp}$.

De préférence, le module de gestion est configuré pour calculer le cumul de la masse réelle comprimée par la station, MRc(t), pour un créneau horaire débutant à l'instant t, pour t variant de 2 (l'instant suivant l'instant courant t0 d'un écart de $\Delta t$) à un instant futur prédéfini n, selon l'algorithme suivant :

- pour t=1 (instant courant t0), MRc(1) = Mu(1) ;

- pour t variant de 2 à n (prévisionnel), si le module de compression était en état de marche à l'instant précédent (t-1), alors [MRc(t) = MRc(t-1) + $\Delta t \times Q_{comp}$] sinon [MRc(t) = MRc(t-1)].

De préférence, la station comprenant plusieurs pistes de distribution, le module de gestion est configuré pour calculer la masse totale réservée pour l'ensemble des pistes de la station Mr(t), à un créneau horaire débutant à l'instant t, pour t variant de l'instant courant t0 à un instant futur prédéfini n, selon l'algorithme suivant :

- pour t variant de 1 à n, on a :

[Math 4]

$$\mathrm{Mr(t)} = \sum_{j=1}^{m} Mr_j(t)$$

où m est le nombre de pistes de la station et $Mr_j(t)$ est la masse réservée sur la piste j pour le créneau t.

De préférence, le module de gestion est configuré pour calculer le cumul de la masse totale réservée sur la station, MTD(t), à un créneau horaire débutant à l'instant t, pour t variant de 2 (l'instant suivant l'instant courant t0 d'un écart de Δt) à un instant futur prédéfini n, selon l'algorithme suivant :

- pour t=1 (instant courant t0), MTD(1) = Mr(1) ;

- pour t variant de 2 à n (prévisionnel), MTD(t) = MTD(t-1) + Mr(t).

De préférence, le module de gestion est configuré pour calculer la masse restant à distribuer sur la station, MRA(t), à un créneau horaire débutant à l'instant t, pour t variant de l'instant courant t0 à un instant futur prédéfini n, selon l'algorithme suivant :

- pour t variant de 1 à n, MRA(t) = MM(t) - MTD(t).

De préférence, le module de gestion est configuré pour calculer l'écart Mer(t) entre la masse utile à l'instant t et la masse utile minimale $M_{u\_min}$ de la station, représentant l'écart au redémarrage du module de compression, à un créneau horaire débutant à l'instant t, pour t variant de l'instant courant t0 à un instant futur prédéfini n, selon l'algorithme suivant :

- pour t variant de 1 à n, si le module de compression est à l'arrêt, alors [Mer(t) = Mu(t) - $M_{u\_min}$], sinon Mer(t) = 0.

De préférence, le module de gestion est configuré pour calculer la masse de gaz non comprimée Mc(t) car le module de stockage est plein et le module de compression à l'arrêt, qui pourrait être distribuée à un ou plusieurs véhicules se présentant à la station, à un créneau horaire débutant à l'instant t, pour t variant de l'instant courant t0 à un instant futur prédéfini n, selon l'algorithme suivant :

- pour t variant de 1 à n, Mc(t) = MM(t) - MRc(t).

Le calcul de Mc(t) permet notamment la réservation de gaz sur des créneaux pour lesquels le stockage de gaz est plein, le module de compression à l'arrêt et pour lesquels une masse de gaz importante est réservée à un créneau postérieur.

De préférence, le module de gestion est configuré pour calculer la masse de gaz distribuable Md(t) pour un créneau horaire débutant à l'instant t, pour t variant de l'instant courant t0 (présent) à un instant futur prédéfini n-1, selon l'algorithme suivant :

- pour t variant de 1 à (n-1), pour x variant de (t+1) à n, déterminer la valeur minimale de MRA(x) : MRA_min(t) = MIN [MRA(x)] et si MIN[ Mu(t+1) ; MRA_min(t+1) - Mc(t+1) ] <= Mer(t+1) alors Md(t) = 0 sinon Md(t) = MIN[ Mu(t+1) ; MRA_min(t+1) - Mc(t+1) ]

où n est un nombre entier naturel de créneaux horaires paramétrable par l'exploitant de la station et MIN est une fonction mathématique qui détermine le minimum des valeurs sur la plage de temps qui est définie entre (t+1) et n.
L'invention concerne également un équipement d'utilisateur pour la réservation de carburant gazeux pour véhicule, notamment automobile, ledit équipement d'utilisateur étant configuré pour communiquer via un réseau de communication avec au moins une station telle que présentée précédemment et pour envoyer, via ledit réseau de communication, une requête de planning pour obtenir le tableau de planification dynamique de la station, ladite requête de planning comprenant l'identifiant dudit équipement d'utilisateur, pour recevoir via le réseau de communication le tableau de planification dynamique géré par la station avec, pour chaque créneau horaire, et le cas échéant pour chaque piste de la station, la masse de gaz distribuable sur ledit créneau horaire et le cas échéant sur ladite piste, pour permettre la sélection par un utilisateur d'un créneau horaire et la saisie d'une masse de gaz à réserver par ledit utilisateur, ladite masse de gaz à réserver étant inférieure ou égale à la masse de gaz distribuable sur le créneau horaire, et pour envoyer via le réseau de communication une requête de réservation comprenant l'identifiant d'un créneau horaire à réserver, une masse de gaz à réserver et le cas échéant un numéro de piste sur laquelle se servir une fois arrivé en station, ladite masse de gaz à réserver étant inférieure ou égale à la masse de gaz distribuable sur le créneau horaire.
L'invention concerne également un système de distribution de carburant gazeux, notamment de Gaz Naturel Comprimé ou d'hydrogène, pour véhicule, notamment automobile, ledit système comprenant :

- au moins une station telle que présentée précédemment,

- au moins un équipement d'utilisateur tel que présenté précédemment,

- au moins un véhicule associé audit équipement d'utilisateur et caractérisé par une pression maximum de réservoir prédéterminée correspondant à la pression maximale admissible dans le réservoir dudit véhicule,

- un réseau de communication configuré pour permettre la communication entre l'au moins une station et l'au moins un équipement d'utilisateur.

L'invention concerne également un procédé de distribution de carburant gazeux, notamment de Gaz Naturel Comprimé ou d'hydrogène, pour véhicule, notamment automobile, ledit procédé, mis en œuvre par une station telle que présentée précédemment, comprenant les étapes de :

- réception, via un réseau de communication, d'une requête de planning envoyée par un équipement d'utilisateur pour obtenir le tableau de planification dynamique de la station,

- envoi audit équipement d'utilisateur, via ledit réseau de communication, du tableau de planification dynamique de la station dans lequel, chaque créneau horaire est associé à une masse de gaz distribuable sur ledit créneau horaire à cet instant,

- réception, via le réseau de communication, d'une requête de réservation d'un créneau horaire et d'une masse de gaz à réserver envoyée par l'équipement d'utilisateur, ladite masse de gaz à réserver étant inférieure ou égale à la masse de gaz distribuable sur le créneau horaire,

- calcul, pour chaque créneau horaire postérieur au créneau horaire réservé, d'une masse de gaz utile prévisionnelle à partir de la masse de gaz utile du créneau horaire précédant le créneau horaire réservé, de la durée du créneau horaire réservé et du débit de compression du module de compression,

- mise à jour du tableau de planification dynamique à partir des masses de gaz utiles prévisionnelles calculées,

- calcul, pour chaque créneau horaire du tableau de planification dynamique, de la masse de gaz distribuable sur chacun des créneaux horaires à partir de la masse de gaz utile prévisionnelle associée audit créneau horaire et de la masse de gaz à réserver reçue,

- mise à jour du tableau de planification dynamique à partir des masses de gaz distribuables calculées,

- identification sur site de l'utilisateur de l'équipement d'utilisateur dans le créneau horaire réservé,

- distribution au véhicule associé à l'équipement d'utilisateur de l'utilisateur identifié, pendant le créneau horaire réservé, de la masse de gaz réservée.

Dans une forme de réalisation, la durée d'un créneau horaire est une valeur prédéfinie, par exemple de 15 minutes, définie par la somme d'une durée fixe de manœuvre du véhicule à l'arrivée et au départ du distributeur, d'une durée fixe d'opérations de l'utilisateur, notamment pour s'identifier et/ou payer le carburant et d'une durée de distribution du gaz dans le véhicule.

Selon un aspect de l'invention, le procédé comprend une étape de validation par le module de gestion de l'identification de l'utilisateur, notamment afin de l'autoriser à remplir son réservoir. Par exemple, la validation peut comprendre la vérification que l'utilisateur se présente sur le créneau qu'il a réservé et/ou que la masse de gaz requise par l'utilisateur est bien distribuable sur le créneau réservé.

Dans une forme de réalisation, le procédé comprend une étape de validation de la requête de réservation avant de réserver la masse de gaz requise dans le tableau de planification dynamique, la validation comprenant par exemple la vérification de l'acceptation du paiement de l'utilisateur.

Avantageusement, le procédé comprend une étape de distribution à un utilisateur se présentant spontanément à la station d'une masse de gaz non réservée si une telle masse de gaz est distribuable. Une fois la masse de gaz non-réservée distribuable délivrée, le procédé comprend une étape de calcul par le module de gestion de la masse de gaz distribuable au niveau de la station pour les réservations ultérieures ou pour les distributions ultérieures de gaz non réservé à partir de la masse de gaz réelle utile.

Avantageusement, le procédé comprend en outre une étape de calcul de la masse de gaz utile réelle stockée dans le module de stockage à l'instant courant, une étape d'initialisation de la masse de gaz utile prévisionnelle du créneau horaire courant par la masse de gaz utile réelle calculée et une étape de recalcul automatique de la masse de gaz utile prévisionnelle pour chaque créneau horaire postérieur à l'instant courant à partir de la valeur de masse de gaz utile réelle affectée à la masse de gaz utile prévisionnelle courante.

De préférence, le calcul de la masse de gaz utile réelle Mu_réelle (ou Mu(t)) à l'instant courant t0, notée Mu(1), est réalisé selon la formule suivante :

[Math 5]

$$Mu\_(1) = \frac{\bar{M}}{RT}\left[\frac{(Pstock - P_{\min\_utile})}{Z} \cdot V\right]$$

où

[Math 6]

$\bar{M}$ est la masse molaire du gaz comprimé et stocké, R est la constante des gaz parfaits, T est la température du gaz stocké dans le module de stockage, $P_{stock}$ est la pression réelle du gaz stocké dans la bouteille de stockage $P_{\min\_utile}$ est une pression prédéterminée qui correspond à la pression utile minimale du module de stockage, cette valeur de pression utile minimale est paramétrable et est supérieure ou égale à la pression maximum admissible dans les réservoirs des véhicules.

Par exemple, pour un module de stockage constitué de trois bouteilles de stockage à trois niveaux de pressions de stockage différents (BP, MP et HP), de volumes respectifs V1, V2 et V3, le calcul de la masse utile Mu est réalisé selon la formule suivante :

[Math 7]

$$Mu(1) = \frac{\bar{M}}{RT}\left[\frac{(PstockHP - P_{\min\_utile})}{Z_1} \cdot V1 + \frac{(PstockMP - P_{MP})}{Z_2} \cdot V2 + \frac{(PstockBP - P_{BP})}{Z_3} \cdot V3\right]$$

où $P_{stockHP}$ est la pression réelle de la bouteille de stockage à haute pression, $P_{\min\_utile}$ est une pression prédéterminée qui correspond à la pression utile minimale du module de stockage (pression supérieure ou égale à la pression maximum admissible dans les réservoirs des véhicules), $P_{stockMP}$ est la pression réelle de la bouteille de stockage à moyenne pression, $P_{MP}$ est la pression d'équilibrage de l'étage de stockage à moyenne pression (valeur paramétrable pour chaque station), $P_{stockBP}$ est la pression réelle de la bouteille de stockage à basse pression, $P_{BP}$ est la pression d'équilibrage de l'étage de stockage à basse pression (valeur paramétrable pour chaque station), $Z_1$ est le coefficient de compressibilité calculé entre $P_{MAX}$ et $P_{stockHP}$, $Z_2$ est le coefficient de compressibilité calculé entre $P_{MP}$ et $P_{stockMP}$, $Z_3$ est le coefficient de compressibilité calculé entre $P_{BP}$ et $P_{stockBP}$.

Dans un premier mode de réalisation, le calcul de la masse de gaz utile prévisionnelle Mu(t) pour un créneau horaire débutant à l'instant t, pour t variant de l'instant courant t0 (présent) à un instant futur prédéfini (t+n), est réalisé selon la formule suivante :

$$M_u(t) = M_u(t\text{-}1) - M_{tot\_réservée}(t\text{-}1) + \Delta t \times Q_{comp}$$

où $M_{tot\_réservée}(t\text{-}1)$ correspond à la masse totale de gaz réservée au créneau précédent, débutant à l'instant (t-1), $\Delta t$ correspond à la durée d'un créneau horaire, $Q_{comp}$ correspond au débit du flux de gaz comprimé entrant dans le module de stockage, c'est-à-dire au débit du flux de gaz comprimé par le module de compression, et n est un nombre entier naturel de créneaux horaires paramétrable par l'exploitant de la station (par exemple de sorte que (t+n) soit le dernier créneau horaire du tableau de planification dynamique). En cas d'écart entre la masse utile prévisionnelle à l'instant courant et la masse utile réelle de la station au même instant courant, la masse utile prévisionnelle Mu(t) peut être recalculée à partir de la valeur réelle de masse de gaz utile à l'instant t selon la formule (Math 1) ci-avant. Par exemple, a minima à chaque début de créneau le module de gestion compare la valeur prévisionnelle et la valeur réelle et réaffecte la valeur réelle à la valeur prévisionnelle.

De préférence, le procédé comprend une étape de calcul de la masse de gaz distribuable Md(t) pour un créneau horaire débutant à l'instant t, pour t variant de l'instant courant t0 (présent) à un instant futur prédéfini (t+n), selon la formule suivante:

$$Md(t) = MIN(Mu(t+1 \text{ à } t+n)) - \Delta t \times Q_{comp}$$

où n est un nombre entier naturel de créneaux horaires paramétrable par l'exploitant de la station et MIN est une fonction mathématique qui détermine le minimum des valeurs de masse de gaz utile prévisionnelle sur la plage de temps qui est définie entre (t+1) et (t+n).

Dans un deuxième mode de réalisation, le calcul, pour chaque créneau horaire postérieur au créneau horaire réservé, d'une masse de gaz utile prévisionnelle est réalisé à partir de la masse de gaz utile du créneau horaire précédant le créneau horaire réservé, de la durée du créneau horaire réservé, du débit de compression du module de compression et de l'état de fonctionnement du module de compression au créneau horaire précédent le créneau horaire réservé.

De préférence, le calcul de la masse de gaz utile prévisionnelle Mu(t) pour un créneau horaire débutant à l'instant t, pour t variant de 2 (l'instant suivant l'instant courant t0 d'un écart de $\Delta t$) à un instant futur prédéfini n, est réalisé selon l'algorithme suivant :

- pour t=1 (instant courant t0), Mu(1) est mesurée en continu sur la station,

- pour t variant de 2 à n (prévisionnel), si le module de compression de gaz est à l'état de fonctionnement à l'instant t et si $[M_u(t-1) - M_{tot\_réservée}(t-1) + \Delta t \times Q_{comp} > M_{u\_max}]$ alors $M_u(t) = M_{u\_max}$ sinon $[M_u(t) = M_u(t-1) - M_{tot\_réservée}(t-1) + \Delta t \times Q_{comp}]$, sinon, si le module de compression de gaz est à état de fonctionnement à l'instant alors $[M_u(t) = M_u(t-1) - M_{tot\_réservée}(t-1)]$,

où $M_{tot\_réservée}(t-1)$ correspond à la masse totale de gaz réservée au créneau précédent, débutant à l'instant (t-1), $\Delta t$ correspond à la durée d'un créneau horaire, $Q_{comp}$ correspond au débit du flux de gaz comprimé entrant dans le module de stockage, c'est-à-dire au débit du flux de gaz comprimé par le module de compression, et n est un nombre entier naturel de créneaux horaires paramétrable par l'exploitant de la station (par exemple de sorte que n soit le dernier créneau horaire du tableau de planification dynamique).

Avantageusement, la station donne un ordre de démarrage au module de compression de manière à ce que le compresseur reste en fonctionnement pendant une durée suffisamment longue et à une fréquence suffisamment faible pour ne pas altérer sa durée de vie. Dans ce mode de fonctionnement, l'ordre de démarrage du compresseur correspond à un niveau de pression minimum en-dessous duquel le compresseur peut fonctionner suffisamment longtemps. A cette pression minimale correspond une quantité de gaz stocké minimale, $M_{u\_min}$. Dans ce mode de fonctionnement, l'ordre d'arrêt du compresseur est la pression maximale du module de stockage, à laquelle correspond une quantité maximale de gaz stocké, $M_{u\_max}$.

Dans ce mode de fonctionnement, le procédé comprend une étape de contrôle par le module de gestion, de l'état de fonctionnement du module de compression, pour un créneau horaire débutant à l'instant t, pour t variant de 2 (l'instant suivant l'instant courant t0 d'un écart de $\Delta t$) à un instant futur prédéfini n, réalisée selon l'algorithme suivant :

- pour t=1 (instant courant t0), l'état de marche du module de compression est donné par la station (état réel) ;

- pour t variant de 2 à n (prévisionnel), si Mu(t) > Mu_max alors le module de compression est arrêté ou si Mu(t) < Mu_min alors le module de compression est mis en fonctionnement, sinon le module de compression est à l'instant t est gardé dans le même état (fonctionnement/marche ou arrêt).

De préférence, le procédé comprend une étape de calcul, par le module de gestion, du cumul de la masse maximale théorique délivrée, MM(t), qui représente le cumul de la masse maximale que pourrait délivrer la station avec une capacité de stockage infinie, ou si des véhicules se présentaient en permanence sur la station, pour un créneau horaire débutant à l'instant t, pour t variant de 2 (l'instant suivant l'instant courant t0 d'un écart de $\Delta t$) à un instant futur prédéfini n, selon l'algorithme suivant :

- pour t=1 (instant courant t0), le cumul de la masse maximale théorique délivrée à l'instant courant (t=1) est égale à la masse de gaz utile prévisionnelle audit instant courant : MM(1) = Mu(1) ;

- pour t variant de 2 à n (prévisionnel), on a $MM(t) = MM(t-1) + \Delta t \times Q_{comp}$.

De préférence, le procédé comprend une étape de calcul, par le module de gestion, du cumul de la masse réelle comprimée par la station, MRc(t), pour un créneau horaire débutant à l'instant t, pour t variant de 2 (l'instant suivant l'instant courant t0 d'un écart de $\Delta t$) à un instant futur prédéfini n, selon l'algorithme suivant :

- pour t=1 (instant courant t0), MRc(1) = Mu(1) ;

- pour t variant de 2 à n (prévisionnel), si le module de compression était en état de marche à l'instant précédent (t-1), alors [MRc(t) = MRc(t-1) + $\Delta$t $\times$ Q$_{comp}$] sinon [MRc(t) = MRc(t-1)].

De préférence, la station comprenant plusieurs pistes de distribution, le procédé comprend une étape de calcul, par le module de gestion, de la masse totale réservée pour l'ensemble des pistes de la station Mr(t), à un créneau horaire débutant à l'instant t, pour t variant de l'instant courant t0 à un instant futur prédéfini n, selon l'algorithme suivant :

- pour t variant de 1 à n, on a

[Math 8]

$$\mathrm{Mr(t)} = \sum_{j=1}^{m} Mr_j(t)$$

où m est le nombre de pistes de la station et Mr$_j$(t) est la masse réservée sur la piste j pour le créneau t.

De préférence, le procédé comprend une étape de calcul, par le module de gestion, du cumul de la masse totale réservée sur la station, MTD(t), à un créneau horaire débutant à l'instant t, pour t variant de 2 (l'instant suivant l'instant courant t0 d'un écart de $\Delta$t) à un instant futur prédéfini n, selon l'algorithme suivant :

- pour t=1 (instant courant t0), MTD(1) = Mr(1) ;

- pour t variant de 2 à n (prévisionnel), MTD(t) = MTD(t-1) + Mr(t).

De préférence, le procédé comprend une étape de calcul, par le module de gestion, de la masse restant à distribuer sur la station, MRA(t), à un créneau horaire débutant à l'instant t, pour t variant de l'instant courant t0 à un instant futur prédéfini n, selon l'algorithme suivant :

- pour t variant de 1 à n, MRA(t) = MM(t) - MTD(t).

De préférence, le procédé comprend une étape de calcul, par le module de gestion, de l'écart Mer(t) entre la masse utile à l'instant t et la masse utile minimale M$_{u\_min}$ de la station, représentant l'écart au redémarrage du module de compression, à un créneau horaire débutant à l'instant t, pour t variant de l'instant courant t0 à un instant futur prédéfini n, selon l'algorithme suivant :

- pour t variant de 1 à n, si le module de compression est à l'arrêt, alors [Mer(t) = Mu(t) - Mu_min], sinon Mer(t) = 0.

De préférence, le procédé comprend une étape de calcul, par le module de gestion, de la masse de gaz non comprimée Mc(t) car le module de stockage est plein et le module de compression à l'arrêt, qui pourrait être distribuée à un ou plusieurs véhicules se présentant à la station, à un créneau horaire débutant à l'instant t, pour t variant de l'instant courant t0 à un instant futur prédéfini n, selon l'algorithme suivant :

- pour t variant de 1 à n, Mc(t) = MM(t) - MRc(t).

Le calcul de Mc(t) permet notamment la réservation de gaz sur des créneaux pour lesquels le stockage de gaz est plein, le module de compression à l'arrêt et pour lesquels une masse de gaz importante est réservée à un créneau postérieur.
Le débit du module de compression peut être variable, notamment dans le cas où le module de compression est constitué de plusieurs compresseurs pouvant fonctionner seuls ou en parallèle.
De préférence, le procédé comprend une étape de calcul, par le module de gestion, de la masse de gaz distribuable Md(t) pour un créneau horaire débutant à l'instant t, pour t variant de l'instant courant t0 (présent) à un instant futur prédéfini n-1, selon l'algorithme suivant :

- pour t variant de 1 à (n-1), pour x variant de (t+1) à n, déterminer la valeur minimale de MRA(x) : MRA_min(t) = MIN [MRA(x)] et si MIN[Mu(t+1) ; MRA_min(t+1) - Mc(t+1) ] <= Mer(t+1) alors Md(t) = 0 sinon Md(t) = MIN[ Mu(t+1) ;

MRA_min(t+1) - Mc(t+1) ]

où n est un nombre entier naturel de créneaux horaires paramétrable par l'exploitant de la station et MIN est une fonction mathématique qui détermine le minimum des valeurs sur la plage de temps qui est définie entre (t+1) et n.

L'invention concerne enfin un produit programme d'ordinateur caractérisé en ce qu'il comporte un ensemble d'instructions de code de programme qui, lorsqu'elles sont exécutées par un ou plusieurs processeurs, configurent le ou les processeurs pour mettre en œuvre un procédé tel que présenté précédemment.

**[Description des dessins]**

D'autres caractéristiques et avantages de l'invention apparaîtront encore à la lecture de la description qui va suivre. Celle-ci est purement illustrative et doit être lue en regard des dessins annexés sur lesquels :

[Fig 1] La **figure 1** illustre schématiquement une forme de réalisation du système selon l'invention.

[Fig 2] La **figure 2** est un exemple de tableau de planification dynamique avant réservation de gaz.

[Fig 3] La **figure 3** illustre un tableau de planification dynamique après une première réservation dans un premier exemple de mise en œuvre.

[Fig 4] La **figure 4** illustre un tableau de planification dynamique après une deuxième réservation dans un premier exemple de mise en œuvre.

[Fig 5] La **figure 5** illustre un tableau de planification dynamique après une troisième réservation dans un premier exemple de mise en œuvre.

[Fig 6] La **figure 6** illustre un tableau de planification dynamique après une première réservation dans un deuxième exemple de mise en œuvre.

[Fig 7] La **figure 7** illustre un tableau de planification dynamique après une deuxième réservation dans un deuxième exemple de mise en œuvre.

[Fig 8] La **figure 8** illustre un tableau de planification dynamique après une troisième réservation dans un deuxième exemple de mise en œuvre.

[Fig 9] La **figure 9** illustre un tableau de planification dynamique après une première réservation dans un troisième exemple de mise en œuvre.

[Fig 10] La **figure 10** est un autre exemple de tableau de planification dynamique avant réservation de gaz.

[Fig 11] La **figure 11** illustre un tableau de planification dynamique après une première réservation dans un quatrième exemple de mise en œuvre.

[Fig 12] La **figure 12** illustre un tableau de planification dynamique après une deuxième réservation dans un quatrième exemple de mise en œuvre.

[Fig 13] La **figure 13** illustre un tableau de planification dynamique après une troisième réservation dans un quatrième exemple de mise en œuvre.

[Fig 14] La **figure 14** illustre un tableau de planification dynamique après une première réservation dans un cinquième exemple de mise en œuvre.

[Fig 15] La **figure 15** illustre un tableau de planification dynamique après une deuxième réservation dans un cinquième exemple de mise en œuvre.

[Fig 16] La **figure 16** illustre un tableau de planification dynamique après une troisième réservation dans un cinquième exemple de mise en œuvre.

[Fig 17] La **figure 17** illustre un tableau de planification dynamique après une première réservation dans un sixième exemple de mise en œuvre.

[Fig 18] La **figure 18** est un autre exemple de tableau de planification dynamique, avant réservation de gaz.

[Fig 19] La **figure 19** illustre un tableau de planification dynamique après une première réservation dans un septième exemple de mise en œuvre.

[Fig 20] La **figure 20** illustre un tableau de planification dynamique après une deuxième réservation dans un septième exemple de mise en œuvre.

[Fig 21] La **figure 21** illustre un tableau de planification dynamique après une troisième réservation dans un septième exemple de mise en œuvre.

[Fig 22] La **figure 22** illustre un tableau de planification dynamique après une première réservation dans un huitième exemple de mise en œuvre.

[Fig 23] La **figure 23** illustre un tableau de planification dynamique après une deuxième réservation dans un huitième exemple de mise en œuvre.

[Fig 24] La **figure 24** illustre un tableau de planification dynamique après une troisième réservation dans un huitième exemple de mise en œuvre.

[Fig 25] La **figure 25** illustre un tableau de planification dynamique après une première réservation dans un neuvième exemple de mise en œuvre.

[Fig 26] La **figure 26** illustre un tableau de planification dynamique après une première réservation dans un dixième exemple de mise en œuvre.

[Fig 27] La **figure 27** illustre un tableau de planification dynamique après une deuxième réservation dans un dixième exemple de mise en œuvre.

[Fig 28] La **figure 28** illustre un tableau de planification dynamique après une troisième réservation dans un dixième exemple de mise en œuvre.

[Fig 29] La **figure 29** illustre schématiquement un mode de réalisation du système selon l'invention.

**[Description des modes de réalisation]**

Système 1

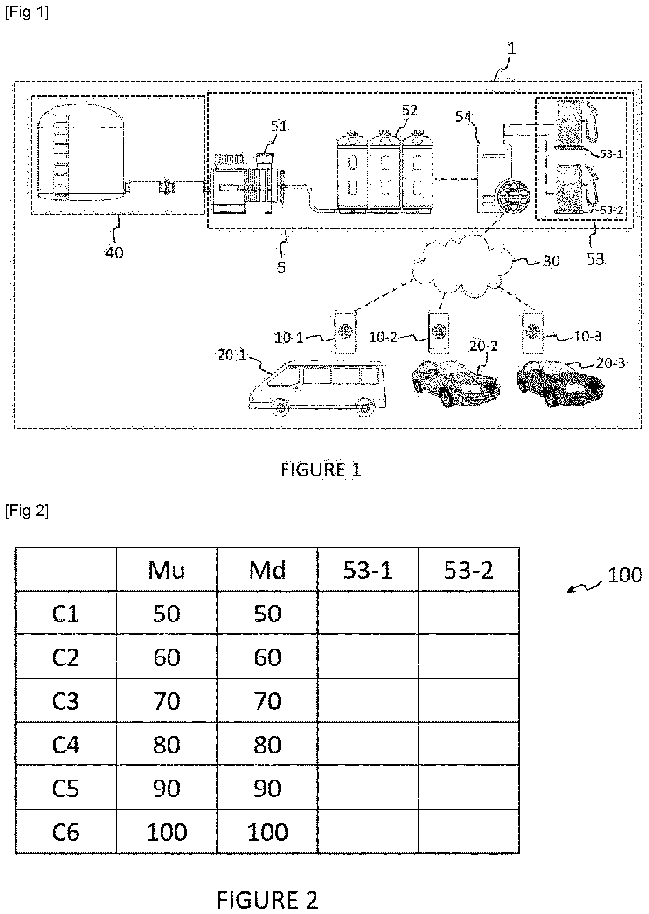

On a représenté à la figure 1 un exemple de système 1 de distribution de Gaz Naturel Comprimé pour véhicules. Les véhicules peuvent être des véhicules automobiles ou des engins de chantier. Les véhicules automobiles peuvent être en particulier des voitures ou des poids-lourds (camion, bus, etc.). Dans une autre forme de réalisation, la station pourrait être une station de distribution d'hydrogène ou de tout autre carburant gazeux.

Dans cet exemple, le système 1 comprend une station 5, un premier équipement d'équipement d'utilisateur 10-1, un deuxième équipement d'utilisateur 10-2, un troisième équipement d'utilisateur 10-3, un premier véhicule 20-1, un deuxième véhicule 20-2, un troisième véhicule 20-3, un réseau de communication 30 et un réseau de distribution de gaz naturel 40. Il va de soi que le système 1 pourrait comprend plus ou moins de trois utilisateurs, notamment plusieurs milliers ou plusieurs millions. Le nombre d'utilisateurs du système 1 peut être illimité.

Station 5

La station 5 comprend un module de compression 51 de gaz, un module de stockage 52 de gaz, un module de distribution 53 et un module de gestion 54.

Module de compression 51

Le module de compression 51 de gaz est adapté pour être relié au réseau de distribution de gaz naturel 40, de préférence via une vanne de contrôle (non représentée), et pour comprimer le gaz naturel reçu dudit réseau de distribution de gaz naturel 40 jusqu'à une pression de consigne, par exemple de l'ordre de 300 bars. A cette fin, le module de compression 51 comprend un ou plusieurs compresseurs.

Module de stockage 52

Le module de stockage 52 est relié au module de compression 51 et est adapté pour stocker le gaz comprimé à la pression de consigne. Le gaz stocké est caractérisé par sa masse, appelée ci-après masse du gaz stocké.

De manière préférée, le module de distribution 52 comprend une pluralité de bouteilles de stockages adaptées pour chacune stocker le gaz comprimé fourni par module de compression 51 et pour remplir le réservoir des véhicules 20-1, 20-2, 20-3 par des phases d'équilibrage de pression successives. Chaque bouteille de stockage peut contenir du gaz comprimé à la pression de consigne ou à une pression inférieure. Le remplissage rapide, typiquement en moins de 15 minutes, de réservoirs à haute pression (200 bars et au-delà notamment) embarqués à bord des véhicules 20-1, 20-2, 20-3 est réalisé classiquement par des équilibrages de pression successifs à partir des différentes bouteilles, chaque bouteille de stockage étant caractérisée par un seuil minimum de pression différent et en-dessous duquel le module de gestion 54 commande le remplissage d'un réservoir de véhicule à partir d'une autre bouteille dont le seuil minimum de pression est plus élevé. Ainsi, le remplissage « en cascade » est obtenu en réalisant une succession d'équilibrages de pression entre, d'une part, le réservoir cible à remplir et, d'autre part, des bouteilles de stockage dont le seuil minimum de pression est croissant (par exemple 100 bars puis 150 bars puis 200 bars). Cette méthode étant connue, elle ne sera pas davantage décrite ici.

Dans le présent exemple, le module de stockage 52 comprend trois bouteilles de stockage à trois pressions de stockage différentes : basse-pression (BP), par exemple 100 bars, moyenne-pression (MP), par exemple 150 bars, et haute-pression (HP), par exemple 200 bars.

Module de distribution 53

Le module de distribution 53 comprend un premier distributeur 53-1 de gaz et un deuxième distributeur 53-2 de gaz configuré chacun pour remplir le réservoir des véhicules 20-1, 20-2, 20-3 à partir de gaz comprimé fourni par le module de stockage 52. A cette fin, chaque distributeur 53-1, 53-2 comprend un moyen de connexion entre le module de stockage 52 et le véhicule 20-1, 20-2, 20-3 de type flexible et pistolet. Le module de distribution 53 peut comprendre en outre un ensemble de mesurage de la quantité de gaz transférée entre le module de stockage et les réservoirs des véhicules.

Chaque distributeur 53-1, 53-2 est configuré pour être commandé par le module de gestion 54 afin de fournir une masse de gaz requise à l'utilisateur l'ayant réservée sur un créneau horaire C1, C2, C3, C4, C5, C6 donné afin de lui délivrer ladite masse de gaz requise. Sur requête dudit utilisateur, le distributeur 53-1, 53-2 est configuré pour être contrôlé par le module de gestion 54 afin de permettre la distribution de la masse de gaz requise par l'utilisateur. La station 5 peut comprendre plusieurs pistes pour les véhicules 20-1, 20-2, 20-3, comportant chacune un ou plusieurs distributeurs 53-1, 53-2. Une piste est définie comme une voie comportant au moins un distributeur 53-1, 53-2. Par exemple, la station 5 peut comporter une piste agencée pour permettre la distribution de GNC pour les véhicules 20-1, 20-2, 20-3 dont la trappe de réservoir est à gauche et une piste agencée pour permettre la distribution de GNC pour les véhicules 20-1, 20-2, 20-3 dont la trappe de réservoir est à droite.

Module de gestion 54

Le module de gestion 54 comprend une zone mémoire (non représentée) dans laquelle est enregistré un tableau de planification dynamique 100 associé à la station 5 et dont des exemples sont illustrés aux figures 2 à 28. Le tableau de planification dynamique 100 comprend un ensemble de créneau horaires C1, C2, C3, C4, C5, C6 où chaque créneau horaire C1, C2, C3, C4, C5, C6 est associé à un identifiant de créneau, à une masse de gaz utile et à une masse de gaz distribuable, c'est-à-dire disponible et non réservé. Par masse utile, on entend la masse de gaz distribuable à la station sur chaque créneau horaire C1, C2, C3, C4, C5, C6 en l'absence de réservation. Cette masse utile augmente au fil des créneaux horaires C1, C2, C3, C4, C5, C6 successifs du fait du remplissage continu du module de stockage 52 avec le gaz comprimé fourni par le module de compression 51.

Le module de gestion 54 est configuré pour recevoir une requête de planning envoyée par un équipement d'utilisateur 10-1, 10-2, 10-3 afin d'obtenir le tableau de planification dynamique 100 de la station 5, ladite requête de planning comprenant l'identifiant dudit équipement d'utilisateur 10-1, 10-2, 10-3.

Le module de gestion 54 est configuré pour envoyer au premier équipement d'utilisateur 10-1, au deuxième équipement d'utilisateur 10-2 et au troisième équipement d'utilisateur 10-3, via le réseau de communication 30, le tableau de planification dynamique 100 de la station 5, ou a minima l'ensemble de créneaux horaires C1, C2, C3, C4, C5, C6 disponibles pour distribuer du Gaz Naturel Comprimé et, pour chaque créneau horaire C1, C2, C3, C4, C5, C6, la masse de gaz distribuable Md sur ledit créneau horaire C1, C2, C3, C4, C5, C6. Le tableau de planification dynamique 100 envoyé aux équipements d'utilisateur 10-1, 10-2, 10-3 est le tableau à jour à l'instant de la requête de planning dont le premier créneau C1 est le créneau horaire courant (ou présent), c'est-à-dire à l'instant de la requête de planning, noté C1 dans les exemples et dont l'instant de début est noté t0.

Le module de gestion 54 est configuré pour recevoir, via ledit réseau de communication 30, une requête de réservation envoyée par l'équipement d'utilisateur 10-1, 10-2, 10-3 comprenant l'identifiant d'un créneau horaire C1, C2, C3, C4, C5, C6 à réserver et une masse de gaz à réserver (i.e. requise), ladite masse de gaz à réserver étant inférieure ou égale à la masse de gaz distribuable Md sur le créneau horaire C1, C2, C3, C4, C5, C6. La requête de réservation peut comporter également un identifiant de l'utilisateur ou de l'équipement d'utilisateur 10-1, 10-2, 10-3, par exemple un code client. Dans une forme de réalisation, la requête de réservation peut comporter en outre une information sur la position du réservoir sur le véhicule 20-1, 20-2, 20-3 (à droite ou à gauche), pour remplissage sur une piste équipée d'un distributeur 53-1, 53-2 à gauche ou à droite.

Le module de gestion 54 est configuré pour calculer, de préférence périodiquement, par exemple à chaque créneau horaire C1, C2, C3, C4, C5, C6, par exemple suite à l'identification d'un équipement d'utilisateur 10-1, 10-2, 10-3 auprès de la station 5, la masse de gaz utile réelle Mu_réelle stockée dans le module de stockage 52 et pour mettre à jour la valeur de masse utile du créneau horaire C1, C2, C3, C4, C5, C6 courant à l'aide de cette valeur de masse utile réelle Mu_réelle calculée.

La masse de gaz utile réelle Mu_réelle correspond à la fraction de la masse du gaz stocké pouvant être fournie au premier véhicule 20-1 et/ou au deuxième véhicule 20-1 et/ou au troisième véhicule 20-3 en s'assurant d'atteindre sa pression maximum prédéterminée, comme définie ci-après. La masse de gaz utile réelle Mu_réelle dépend donc de la différence de pression entre la pression de stockage du module de stockage 52 et la pression utile minimum, ladite pression utile minimum devant être supérieure au maximum des pressions de réservoir de l'ensemble des véhicules 20-1, 20-2, 20-3 afin d'assurer que le plein de GNC puisse être réalisé pour tout véhicule 20-1, 20-2, 20-3.

Avantageusement, le module de gestion 54 est configuré pour calculer la masse de gaz utile réelle stockée dans le module de stockage 52 à l'instant courant, pour initialiser la valeur de la masse de gaz utile du créneau horaire courant t0 par la masse de gaz utile réelle calculée à partir des valeurs mesurées en continu sur la station et pour recalculer automatiquement la masse de gaz utile pour chaque créneau horaire postérieur à l'instant courant à partir de la valeur de masse de gaz utile réelle affectée à la masse de gaz utile courante.

De préférence, le module de gestion 54 est configuré pour calculer la masse de gaz utile réelle Mu_réelle (ou Mu(t)) à l'instant courant t0 (t=1), notée Mu(1), selon la formule suivante :

[Math 9]

$$Mu(1) = \frac{\bar{M}}{RT}\left[\frac{(Pstock - P_{\min\_utile})}{Z} \cdot V\right]$$

où

[Math 10]

$\bar{M}$ est la masse molaire du gaz comprimé et stocké, R est la constante des gaz parfaits, T est la température du gaz stocké dans le module de stockage 52, $P_{stock}$ est la pression réelle du gaz stocké dans la bouteille de stockage $P_{\min\_utile}$ est une pression prédéterminée qui correspond à la pression utile minimale du module de stockage 52, cette valeur de pression utile minimale est paramétrable et est supérieure ou égale à la pression maximum admissible dans les réservoirs des véhicules.

Par exemple, pour un module de stockage 52 constitué de trois bouteilles de stockage à trois niveaux de pressions de stockage différents (BP, MP et HP), de volumes respectifs V1, V2 et V3, le module de gestion 54 est configuré pour calculer la masse utile Mu courante selon la formule suivante :

[Math 11]

$$Mu(1) = \frac{\bar{M}}{RT}\left[\frac{(PstockHP-P_{\min\_utile})}{Z_1} \cdot V1 + \frac{(PstockMP-P_{MP})}{Z_2} \cdot V2 + \frac{(PstockBP-P_{BP})}{Z_3} \cdot V3\right]$$

où $P_{stockHP}$ est la pression réelle de la bouteille de stockage à haute pression, $P_{min\_utile}$ est une pression prédéterminée qui correspond à la pression utile minimale du module de stockage 52 (pression supérieure ou égale à la pression maximum admissible dans les réservoirs des véhicules), $P_{stockMP}$ est la pression réelle de la bouteille de stockage à moyenne pression, $P_{MP}$ est la pression d'équilibrage de l'étage de stockage à moyenne pression (valeur paramétrable pour chaque station), $P_{stockBP}$ est la pression réelle de la bouteille de stockage à basse pression, $P_{BP}$ est la pression d'équilibrage de l'étage de stockage à basse pression (valeur paramétrable pour chaque station), $Z_1$ est le coefficient de compressibilité calculé entre $P_{MAX}$ et $P_{stockHP}$, $Z_2$ est le coefficient de compressibilité calculé entre $P_{MP}$ et $P_{stockMP}$, $Z_3$ est le coefficient de compressibilité calculé entre $P_{BP}$ et $P_{stockBP}$.

En cas d'écart entre la masse utile prévisionnelle à l'instant courant t0 (t=1) et la masse utile réelle de la station 5 au même instant courant, le module de gestion 54 est configuré pour recalculer la masse utile prévisionnelle Mu(t) pour t variant de 2 à n à partir de la valeur réelle de masse de gaz utile à l'instant t0 (t=1) selon la formule ci-avant. Par exemple, a minima à chaque début de créneau, le module de gestion 54 compare la valeur prévisionnelle et la valeur réelle et réaffecte la valeur réelle à la valeur prévisionnelle.

Le module de gestion 54 est configuré pour mettre à jour le tableau de planification dynamique 100 à partir des masses de gaz utiles Mu(t) prévisionnelles calculées.

Le module de gestion 54 est configuré pour calculer, pour chaque créneau horaire C1, C2, C3, C4, C5, C6 du tableau de planification dynamique 100, la masse de gaz distribuable Md sur chacun des créneaux horaires C1, C2, C3, C4, C5, C6 à partir de la masse de gaz utile Mu(t) prévisionnelle associée audit créneau horaire C1, C2, C3, C4, C5, C6 et de la masse de gaz à réserver reçue.

Le module de gestion 54 est configuré pour mettre à jour le tableau de planification dynamique 100 à partir des masses de gaz distribuables Md calculées.

Le module de gestion 54 est configuré pour identifier ou authentifier sur site l'utilisateur de l'équipement d'utilisateur 10-1, 10-2, 10-3 dans le créneau horaire C1, C2, C3, C4, C5, C6 réservé. Par les termes « sur site », on entend localement au niveau de la station 5 lorsque l'utilisateur est physiquement présent pour remplir son réservoir de véhicule sur le créneau horaire C1, C2, C3, C4, C5, C6 qu'il a réservé.

Le module de gestion 54 est configuré pour autoriser et contrôler la distribution au véhicule 20-1, 20-2, 20-3 associé à l'équipement d'utilisateur 10-1, 10-2, 10-3 de l'utilisateur identifié, via l'un des distributeurs 53-1, 53-2, pendant le créneau horaire C1, C2, C3, C4, C5, C6 réservé, de la masse de gaz réservée.

Ce faisant, les pleins de véhicules 20-1, 20-2, 20-3 n'ayant pas réservé peuvent être pris en compte si une masse de gaz distribuable suffisante est disponible au moment où ils se présentent à la station 5. Une fois la masse de gaz non-réservée distribuable délivrée, le module de gestion 54 calcule de nouveau la masse de gaz distribuable au niveau de la station 5 pour les réservations ultérieures ou pour les distributions ultérieures de gaz non réservé à partir de la masse de gaz utile réelle Mu_réelle.

Les écarts entre la théorie et la réalité, par exemple dus aux variations de température ambiante ou aux pannes matérielles ou aux coupures du réseau de distribution de gaz 40 peuvent également pris en compte en recalculant à tout instant la masse de gaz utile distribuable en station 5.

Avantageusement, une valeur distribuable minimale de masse de gaz Mdispo_min peut être utilisée pour absorber les écarts entre la valeur de masse de gaz utile prévisionnelle Mu(t) calculée et la valeur de masse de gaz utile réelle Mu_réelle donnée par le module de stockage 52 à partir des sondes de pression. La masse utile distribuable prévisionnelle proposée à la réservation par les utilisateurs peut ainsi être réduite de la valeur disponible minimale de gaz Mdispo_min pour assurer de délivrer la masse réservée par l'utilisateur :

$M_{distribuable\_réelle}(t) - M_{distribuable\_prévisionnelle}(t) > 0$. La Valeur $M_{distribuable\_à\_réserver}(t)$ envoyée avec les créneaux à l'utilisateur pour réservation est alors $M_{distribuable\_à\_réserver}(t) = M_{utile\ distribuable\_prévisionnelle}(t) - M_{dispo\_min}$. Effectivement, chaque réservation enregistrée/validée doit pouvoir être honorée au temps t. $M_{dispo\_min}$ peut être une valeur prédéterminée, re-paramétrée régulièrement à partir de l'observation du fonctionnement de la station 5 ou calculée par la station 5.

Première forme de réalisation

Dans une première forme de réalisation, le module de gestion 54 est configuré pour calculer, pour chaque créneau horaire C1, C2, C3, C4, C5, C6 postérieur au créneau horaire C1, C2, C3, C4, C5, C6 réservé, une masse de gaz utile prévisionnelle Mu(t) à partir de la masse de gaz utile Mu(t-1) du créneau horaire C1, C2, C3, C4, C5, C6 précédant le créneau horaire réservé, de la durée du créneau horaire C1, C2, C3, C4, C5, C6 réservé $\Delta t$ et du débit

Qcomp du flux de gaz fourni par le module de compression 51. La valeur théorique de la masse de gaz utile Mu est calculée entre un instant t et un instant précédent (t-1), pour t variant de l'instant courant t0 (présent) à un instant futur prédéfini (t+n), est réalisé selon la formule suivante, selon la formule :

- pour t=1 (instant courant t0), Mu(1) est mesurée en continu sur la station (initialisation),
-

$$Mu(t) = Mutile(t\text{-}1) - Mtot\_réservée(t\text{-}1) + \Delta t \times Qcomp \qquad [1]$$

où Mtot_réservée(t-1) est la masse de gaz totale réservée à l'instant (t-1), Δt est la durée d'un créneau horaire, Qcomp le débit du module de compression 51, qui correspond au débit de gaz comprimé entrant dans le module de stockage 52 et n est un nombre entier naturel de créneaux horaires paramétrable par l'exploitant de la station (par exemple de sorte que (t+n) soit le dernier créneau horaire du tableau de planification dynamique).

La valeur ainsi calculée peut avantageusement être remplacée par la valeur de masse de gaz utile réelle au temps t en cas d'écart de plus de, par exemple, 500 g (valeur paramétrable), comme cela est décrit ci-après, afin de réajuster les valeurs des masses utiles prévisionnelles permettant les réservations ultérieures. Ainsi, les pleins de véhicules 20-1, 20-2, 20-3 n'ayant pas réservé sont bien pris en compte. Les écarts entre la théorie et la réalité, notamment dus aux variations de température ambiante sont également pris en compte.

Le module de gestion 54 est configuré pour calculer la masse de gaz distribuable Md(t) pour un créneau horaire débutant à l'instant t, pour t variant de l'instant courant t0 (présent) à un instant futur prédéfini (t+n), selon la formule suivante:

$$Md(t) = MIN(Mu(t+1 \text{ à } t+n)) - \Delta t \times Q_{comp}$$

où n est un nombre entier naturel de créneaux horaires paramétrable par l'exploitant de la station (par exemple de sorte que (t+n) soit le dernier créneau horaire du tableau de planification dynamique) et MIN est une fonction mathématique qui détermine le minimum des valeurs de masse de gaz utile prévisionnelle sur la plage de temps qui est définie entre (t+1) et (t+n).

Deuxième forme de réalisation

Dans une deuxième forme de réalisation, le module de gestion 54 est configuré pour calculer, pour chaque créneau horaire postérieur au créneau horaire réservé, la masse de gaz utile prévisionnelle à partir de la masse de gaz utile du créneau horaire précédant le créneau horaire réservé, de la durée du créneau horaire réservé, du débit de compression du module de compression 51 et de l'état de fonctionnement du module de compression 51 au créneau horaire précédent le créneau horaire réservé.

De préférence, le module de gestion 54 est configuré pour calculer la masse de gaz utile prévisionnelle Mu(t) pour un créneau horaire débutant à l'instant t, pour t variant de 2 (l'instant suivant l'instant courant t0 d'un écart de Δt) à un instant futur prédéfini n, selon l'algorithme suivant :

- pour t=1 (instant courant t0), Mu(1) est mesurée en continu sur la station,

- pour t variant de 2 à n (prévisionnel), si le module de compression 51 de gaz était à l'état de fonctionnement à l'instant précédent (t-1) et si [$M_u$(t-1) - $M_{tot\_réservée}$(t-1) + $\Delta t \times Q_{comp}$ > $M_{u\_max}$] alors $M_u$(t) = $M_{u\_max}$ sinon [$M_u$(t) = $M_u$(t-1) - $M_{tot\text{-}réservée}$(t-1) + $\Delta t \times Q_{comp}$], sinon, si le module de compression 51 de gaz était à état de fonctionnement à l'instant précédent (t-1) alors [$M_u$(t) = $M_u$(t-1) - $M_{tot\_réservée}$(t-1)],

où $M_{tot\_réservée}$(t-1) correspond à la masse totale de gaz réservée au créneau précédent, débutant à l'instant (t-1), Δt correspond à la durée d'un créneau horaire, $Q_{comp}$ correspond au débit du flux de gaz comprimé entrant dans le module de stockage 52, c'est-à-dire au débit du flux de gaz comprimé par le module de compression 51, et n est un nombre entier naturel de créneaux horaires paramétrable par l'exploitant de la station (par exemple de sorte que n soit le dernier créneau horaire du tableau de planification dynamique).

Avantageusement, la station 5 donne un ordre de démarrage au module de compression 51 de manière à ce que le module de compression 51 reste en fonctionnement pendant une durée suffisamment longue et à une fréquence suffisamment faible pour ne pas altérer sa durée de vie. Dans ce mode de fonctionnement, l'ordre de démarrage du compresseur correspond à un niveau de pression minimum en-dessous duquel le compresseur peut fonctionner suffisamment longtemps. A cette pression minimale correspond une quantité de gaz stocké minimale, $M_{u\_min}$. Dans ce mode de fonctionnement, l'ordre d'arrêt du compresseur est la pression maximale du module de stockage 52, à laquelle correspond une quantité maximale de gaz stocké, $M_{u\_max}$. Dans ce mode de fonctionnement, le module de gestion 54 contrôle l'état de fonctionnement du compresseur, pour un créneau horaire débutant à l'instant t, pour t variant de 2 (l'instant suivant l'instant courant t0 d'un écart de $\Delta t$) à un instant futur prédéfini n, selon l'algorithme suivant :

- pour t=1 (instant courant t0), l'état de marche du module de compression 51 est donné par la station (état réel) ;

- pour t variant de 2 à n (prévisionnel), si Mu(t) > Mu_max alors le module de compression 51 est arrêté ou si Mu(t) < Mu_min alors le module de compression 51 est mis en fonctionnement, sinon le module de compression 51 est à l'instant t est gardé dans le même état (fonctionnement/marche ou arrêt).

De préférence, le module de gestion 54 est configuré pour calculer le cumul de la masse maximale théorique délivrée, MM(t), qui représente le cumul de la masse maximale que pourrait délivrer la station avec une capacité de stockage infinie, ou si des véhicules se présentaient en permanence sur la station, pour un créneau horaire débutant à l'instant t, pour t variant de 2 (l'instant suivant l'instant courant t0 d'un écart de $\Delta t$) à un instant futur prédéfini n, selon l'algorithme suivant :

- pour t=1 (instant courant t0), le cumul de la masse maximale théorique délivrée à l'instant courant (t=1) est égale à la masse de gaz utile prévisionnelle audit instant courant : MM(1) = Mu(1) ;

- pour t variant de 2 à n (prévisionnel), on a MM(t) = MM(t-1) + $\Delta t \times Q_{comp}$.

De préférence, le module de gestion 54 est configuré pour calculer le cumul de la masse réelle comprimée par la station, MRc(t), pour un créneau horaire débutant à l'instant t, pour t variant de 2 (l'instant suivant l'instant courant t0 d'un écart de $\Delta t$) à un instant futur prédéfini n, selon l'algorithme suivant :

- pour t=1 (instant courant t0), MRc(1) = Mu(1) ;

- pour t variant de 2 à n (prévisionnel), si le module de compression 51 était en état de marche à l'instant précédent (t-1), alors [MRc(t) = MRc(t-1) + $\Delta t \times Q_{comp}$] sinon [MRc(t) = MRc(t-1)].

De préférence, la station comprenant plusieurs pistes de distribution, le module de gestion 54 est configuré pour calculer la masse totale réservée pour l'ensemble des pistes de la station Mr(t), à un créneau horaire débutant à l'instant t, pour t variant de l'instant courant t0 à un instant futur prédéfini n, selon l'algorithme suivant :

- pour t variant de 1 à n, on a

[Math 13]

$$\mathrm{Mr(t)} = \sum_{j=1}^{m} Mr_j(t)$$

où m est le nombre de pistes de la station et $Mr_j(t)$ est la masse réservée sur la piste j pour le créneau t.

De préférence, le module de gestion 54 est configuré pour calculer le cumul de la masse totale réservée sur la station, MTD(t), à un créneau horaire débutant à l'instant t, pour t variant de 2 (l'instant suivant l'instant courant t0 d'un écart de $\Delta t$) à un instant futur prédéfini n, selon l'algorithme suivant :

- pour t=1 (instant courant t0), MTD(1) = Mr(1) ;

- pour t variant de 2 à n (prévisionnel), MTD(t) = MTD(t-1) + Mr(t).

De préférence, le module de gestion 54 est configuré pour calculer la masse restant à distribuer sur la station, MRA(t), à un créneau horaire débutant à l'instant t, pour t variant de l'instant courant t0 à un instant futur prédéfini n, selon l'algorithme suivant :

- pour t variant de 1 à n, MRA(t) = MM(t) - MTD(t).

De préférence, le module de gestion 54 est configuré pour calculer l'écart Mer(t) entre la masse utile à l'instant t et la masse utile minimale $M_{u\_min}$ de la station, représentant l'écart au redémarrage du module de compression 51, à un créneau horaire débutant à l'instant t, pour t variant de l'instant courant t0 à un instant futur prédéfini n, selon l'algorithme suivant :

- pour t variant de 1 à n, si le module de compression 51 est à l'arrêt, alors [Mer(t) = Mu(t) - Mu_min], sinon Mer(t) = 0.

De préférence, le module de gestion 54 est configuré pour calculer la masse de gaz non comprimée Mc(t) car le module de stockage 52 est plein et le module de compression 51 à l'arrêt, qui pourrait être distribuée à un ou plusieurs véhicules se présentant à la station, à un créneau horaire débutant à l'instant t, pour t variant de l'instant courant t0 à un instant futur prédéfini n, selon l'algorithme suivant :

- pour t variant de 1 à n, Mc(t) = MM(t) - MRc(t).

Le calcul de Mc(t) permet notamment la réservation de gaz sur des créneaux pour lesquels le stockage de gaz est plein, le module de compression 51 à l'arrêt et pour lesquels une masse de gaz importante est réservée à un créneau postérieur.

Le débit du module de compression 51 peut être variable, notamment dans le cas où le module de compression 51 est constitué de plusieurs compresseurs pouvant fonctionner seuls ou en parallèle.

De préférence, le module de gestion 54 est configuré pour calculer la masse de gaz distribuable Md(t) pour un créneau horaire débutant à l'instant t, pour t variant de l'instant courant t0 (présent) à un instant futur prédéfini n-1, selon l'algorithme suivant :

- pour t variant de 1 à (n-1), pour x variant de (t+1) à n, déterminer la valeur minimale de MRA(x) : MRA_min(t) = MIN [MRA(x)] et si MIN[Mu(t+1) ; MRA_min(t+1) - Mc(t+1) ] <= Mer(t+1) alors Md(t) = 0 sinon Md(t) = MIN[ Mu(t+1) ; MRA_min(t+1) - Mc(t+1) ]

où n est un nombre entier naturel de créneaux horaires paramétrable par l'exploitant de la station et MIN est une fonction mathématique qui détermine le minimum des valeurs sur la plage de temps qui est définie entre (t+1) et n.

*Durée des créneaux horaires*

La durée d'un créneau horaire peut être une valeur prédéfinie, par exemple de 15 minutes, définie par la somme d'une durée fixe de manœuvre du véhicule à l'arrivée et au départ du distributeur, d'une durée fixe d'opérations de l'utilisateur, notamment pour s'identifier et/ou payer le carburant.

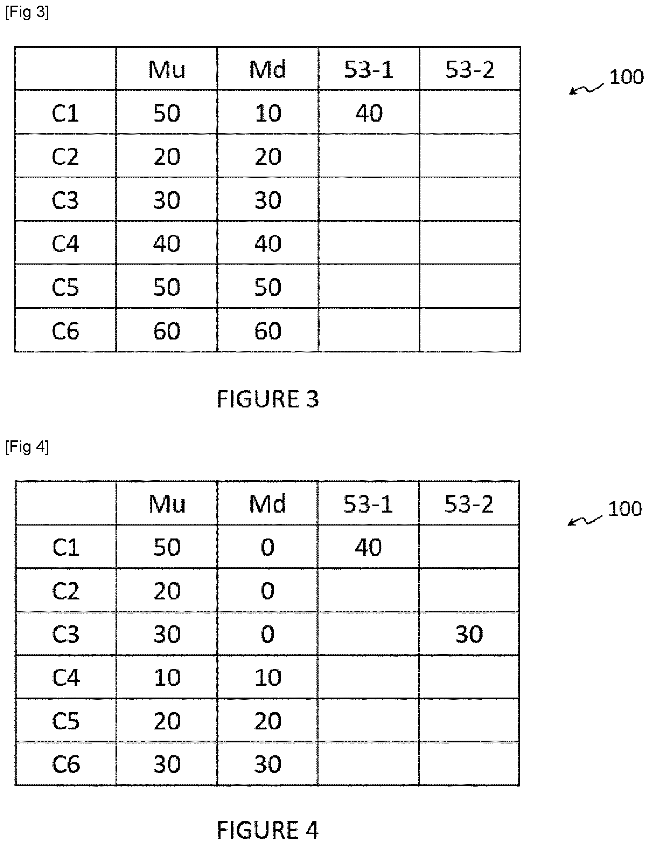

Dans les exemples décrits ci-après en référence aux figures 3 à 9 et 11 à 17, la durée des créneaux horaires C1, C2, C3, C4, C5, C6 est fixe. Par exemple, la durée des créneaux horaires C1, C2, C3, C4, C5, C6 peut être calculée comme étant la somme d'une durée de manœuvre correspondant à la durée nécessaire au véhicule pour stationner sur la piste et en repartir, d'une durée de manipulation correspondant à la durée nécessaire à l'utilisateur pour utiliser le module de distribution 53 avant de se servir en carburant et une fois s'être servi et payer son carburant et d'une durée maximale de distribution de carburant. La durée d'un créneau fixe peut par exemple être de l'ordre de 15 minutes, afin de permettre à un poids lourd d'effectuer un plein de GNC avec un pistolet de type NGV2 d'une durée de l'ordre de 8 minutes et à un véhicule utilitaire léger d'effectuer un plein de GNC avec un pistolet de type NGV1 d'une durée de l'ordre de 10 minutes. La durée des créneaux horaires peut être différente sur chaque piste de la station 5.

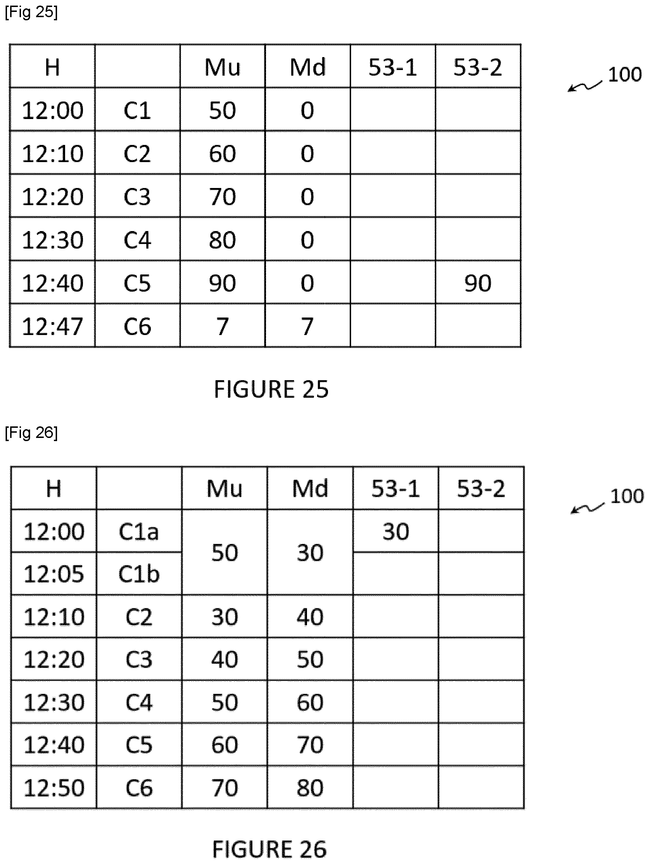

En variante, un créneau horaire peut être subdivisé en plusieurs sous-créneaux. Par exemple C1, peut être subdivisé en deux créneaux distincts C1a et C1b de durées potentiellement différentes, C1a étant le début dudit créneau C1 et C1b la durée restante entre la fin de C1a et la fin de C1 (exemples des figures 26 à 28). Un créneau C1 peut par exemple être divisé en deux créneaux C1a et C1b si la durée de C1b est supérieure ou égale à la somme de la durée de manœuvre, la durée de manipulation et la durée nécessaire à la distribution par un pistolet de type NGV1 de la quantité minimale de distribution autorisée. Dans ce cas, la masse utile distribuable sur ce créneau C1b peut être limitée par la durée de distribution disponible sur le créneau C1b.

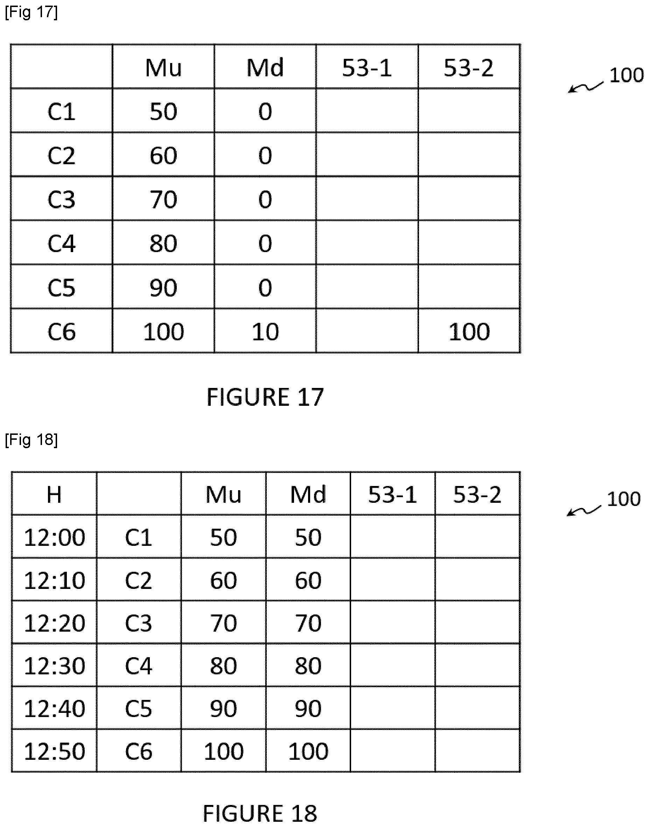

En variante, la durée des créneaux horaires C1, C2, C3, C4, C5, C6 pourrait être variable et dépendre notamment de la quantité de gaz réservée sur chaque créneau horaire C1, C2, C3, C4, C5, C6 (exemples des figures 18 à 25). La durée du créneau horaire C1, C2, C3, C4, C5, C6 de réservation d'un plein dépendant de la quantité de GNC réservée pour ce créneau horaire C1, C2, C3, C4, C5, C6, une optimisation du tableau de planification dynamique des réservations peut être réalisée sur une durée Δt de créneau horaire C1, C2, C3, C4, C5, C6 glissante.

La durée d'un créneau horaire C1, C2, C3, C4, C5, C6 de réservation d'un distributeur Drésa_t_i (i.e. d'utilisation d'un distributeur 53-1, 53-2) à un instant t est fonction de la masse de gaz réservée M_(réservée_t) à l'instant t et pour la piste i, du débit moyen de remplissage Q_NGVx du véhicule 20-1, 20-2, 20-3 et des durées de manœuvre Dmanœuvre et de Dmanipulation manipulation sur la station 5 pour chaque plein :

$$Drésa\_t\_i = M\_(réservée\_t)/Q\_NGVx + Dmanœuvre + Dmanipulation$$

Le débit de remplissage QNGVx est variable sur la durée du remplissage en fonction de la pression maximum réelle du gaz stocké dans le module de stockage 52 en temps réel. Des valeurs moyennes peuvent être utilisées pour le calcul, par exemple un débit de 4 kg/min pour un distributeur 53-1, 53-2 utilisant un pistolet par exemple de type NGV1 et par exemple un débit de 30 kg/min pour un distributeur 53-1, 53-2 utilisant un pistolet par exemple de type NGV2. Pour une station 5 équipée de différentes pistes et distributeurs 53-1, 53-2, les créneaux horaires C1, C2, C3, C4, C5, C6 démarrant à la même heure peuvent donc être de durée différente.

Le choix du type de pistolet (par exemple NGV1 ou NGV2) peut se faire automatiquement par le module de gestion 54, par exemple de la manière suivante :

- si la masse requise par l'utilisateur est supérieure à une valeur à déterminer, par exemple 50 kg, alors on considère que le véhicule 20-1, 20-2, 20-3 fonctionne avec un pistolet de type NGV2, et donc la valeur de QNGVx prend par exemple la valeur de 30 kg/min dans le calcul de la durée de réservation,

- si la masse requise par l'utilisateur est inférieure ou égale à une valeur à déterminer, par exemple 50 kg, alors on considère que le véhicule 20-1, 20-2, 20-3 fonctionne avec un pistolet de type NGV1, et donc la valeur de QNGVx prend par exemple la valeur de 4 kg/min dans le calcul de la durée de réservation.

Lorsqu'un créneau horaire C1, C2, C3, C4, C5, C6 est réservé, son heure de démarrage est fixe, c'est-à-dire ne peut plus varier. Par exemple, si le créneau horaire $C_x$ démarre le 2/01/2021 à 12:00 et que la durée du créneau horaire est de 8 min, le créneau horaire suivant $C_{x+1}$ disponible à la réservation démarre à le 2/01/2021 à 12:08.

Si un utilisateur souhaite réserver une distribution de gaz le 2/01/2021 avant 12:00, il choisit un créneau horaire C1, C2, C3, C4, C5, C6 disponible. Le module de gestion 54 calcule l'heure du démarrage du créneau horaire $C_{x-1}$ de manière à ne pas affecter l'heure de démarrage du créneau horaire $C_x$ : la fin du créneau horaire $C_{x-1}$ est antérieure à l'heure de démarrage du créneau horaire $C_x$, donc antérieure à 2/01/2021 à 12:00.

*Analyse des données de la station 5*

Au fur et à mesure de l'utilisation de la station 5, le module de gestion 54 peut accumuler des données permettant de mieux connaître les périodes d'affluence de la station 5 et ainsi d'en optimiser le fonctionnement. Il pourra donc par exemple être envisagé d'intégrer des réservations fictives paramétrables (par exemple quantité réservée et fréquence de réservation) permettant d'assurer l'avitaillement de véhicules 20-1, 20-2, 20-3 n'ayant pas réservé leur plein et permettant de gérer aussi et notamment les périodes d'affluence. La connaissance de l'affluence sur la station 5 sera valorisée, par exemple en influençant les réservations en période creuse.

Une logique tarifaire peut être définie, dépendant notamment de l'horaire de la réservation (des tarifs plus faibles pourront être affectés aux heures creuses), de la fidélité de l'utilisateur final, de la consommation de l'utilisateur final : un utilisateur qui consomme beaucoup pourra par exemple avoir un tarif préférentiel, du respect des réservations effectuées (ponctualité et précision des quantités réservées par rapport à celles distribuées), etc.

Le module de gestion 54 est configuré pour calculer la masse de gaz distribuable par la station 5 sur chacun des créneaux horaires C1, C2, C3, C4, C5, C6 à partir de la masse de gaz utile Mu calculée et de la masse de gaz à réserver reçue afin de mettre à jour la masse de gaz distribuable sur chaque créneau horaire C1, C2, C3, C4, C5, C6. La masse de gaz distribuable sur un créneau horaire C1, C2, C3, C4, C5, C6 correspond à la différence entre la masse utile distribuable sur ledit créneau horaire C1, C2, C3, C4, C5, C6 au niveau du module de stockage 52 et la ou les masses de gaz réservées sur ledit créneau horaire C1, C2, C3, C4, C5, C6 ou les créneaux horaires C1, C2, C3, C4, C5, C6 antérieurs ou postérieurs.

De préférence, le module de gestion 54 est configuré pour permettre le paiement directement sur site et l'authentification de l'utilisateur qui a pré-réservé une masse de gaz.

Le module de gestion 54 peut comprendre un écran d'affichage, par exemple pour permettre un processus d'interaction continu et/ou guidé avec l'utilisateur, par exemple pour son identification et/ou son paiement, ou pour afficher des informations relatives à la disponibilité de gaz, des distributeurs 53-1, 53-2 et/ou des pistes.

Le module de gestion 54 est configuré pour commander les distributeurs 53-1, 53-2 afin de contrôler la distribution, pendant les créneaux horaires C1, C2, C3, C4, C5, C6 réservé, des masses de gaz réservées par les utilisateurs.

De préférence, le module de gestion 54 est configuré pour distribuer à un utilisateur se présentant à la station une masse de gaz non réservée si une telle masse de gaz est distribuable. Une fois la masse de gaz non-réservée distribuable délivrée, le module de gestion 54 calcule de nouveau la masse de gaz distribuable au niveau de la station 5 pour les réservations ultérieures ou pour les distributions ultérieures de gaz non réservé.

De préférence, le module de gestion 54 est configuré pour valider une réservation de gaz en fonction du profil de l'utilisateur demandant ladite réservation. Par exemple, un système de bonus/malus peut être appliqué pour tenir compte respectivement de la ponctualité ou des retards ou non-respect de réservation précédentes ou bien de l'occurrence de réservation en période de pointe ou en période creuse, ou bien limiter la masse de gaz réservée sur un créneau horaire C1, C2, C3, C4, C5, C6 pour permettre une réservation avec suffisamment de masse disponible sur le créneau horaire C1, C2, C3, C4, C5, C6 suivant, etc.

De préférence, le module de gestion 54 est configuré pour communiquer avec l'utilisateur en cas de quantité réservée non distribuable ou suite à la mise à jour de la quantité de gaz utile réelle ou suite à une indisponibilité de la station (panne, ...). Le module de gestion 54 peut par exemple envoyer un message sur l'équipement d'utilisateur 10-1, 10-2, 10-3 dudit l'utilisateur.

Le module de gestion 54 comprend un processeur apte à mettre en œuvre un ensemble d'instructions permettant de réaliser ces fonctions.

*Signalétique*

De préférence, une signalétique est mise en place sur la station 5, indiquant notamment le niveau du stock de gaz distribuable de la station. La signalétique est par exemple une jauge lumineuse par distributeur 53-1, 53-2, intégrant un code couleur (par exemple un vert vif pour un module de stockage plein, un rouge vif pour un module de stockage vide et un dégradé entre les deux). Ainsi, un utilisateur final n'ayant pas réservé ne prendra pas la place sur une piste réservée dans les minutes suivantes, et ne s'arrêtera pas à la station 5 si la signalétique lui indique qu'il n'y a pas de gaz distribuable.

Le système de gestion est configuré pour prendre en compte une quantité minimale de distribution, selon le respect de l'OIML R139.

En cas de forte affluence, ou si la masse distribuable est inférieure ou égale à la quantité minimale de distribution, la signalétique de la station indique de préférence que seuls les pleins réservés sont possibles. Le module de gestion 54 peut par exemple également afficher sur son écran un message dans ce sens et interdire toute transaction non réservée.

Equipements d'utilisateur 10-1, 10-2, 10-3

Chacun du premier équipement d'utilisateur 10-1, du deuxième équipement d'utilisateur 10-2 et du troisième équipement d'utilisateur 10-3 est configuré pour communiquer avec la station 5 via le réseau de communication 30. De manière plus générale, lorsque le système 1 comprend plusieurs stations 5, chacun du premier équipement d'utilisateur 10-1, du deuxième équipement d'utilisateur 10-2 et du troisième équipement d'utilisateur 10-3 est configuré pour communiquer avec une ou plusieurs des stations 5 via le réseau de communication 30.

Chacun du premier équipement d'utilisateur 10-1, du deuxième équipement d'utilisateur 10-2 et du troisième équipement d'utilisateur 10-3 est configuré pour recevoir, via le réseau de communication 30, le tableau de planification dynamique 100 ou l'ensemble des créneaux horaires C1, C2, C3, C4, C5, C6 disponibles pour la distribution de Gaz Naturel Comprimé proposé par la station 5 et, pour chaque créneau horaire C1, C2, C3, C4, C5, C6, la masse de gaz distribuable sur ledit créneau horaire C1, C2, C3, C4, C5, C6.

Chacun du premier équipement d'utilisateur 10-1, du deuxième équipement d'utilisateur 10-2 et du troisième équipement d'utilisateur 10-3 est configuré pour permettre à l'utilisateur dudit respectivement premier équipement d'utilisateur 10-1, deuxième équipement d'utilisateur 10-2 ou troisième équipement d'utilisateur 10-3, la sélection d'un créneau horaire C1, C2, C3, C4, C5, C6 et la saisie d'une masse de gaz à réserver, ladite masse de gaz à réserver étant inférieure ou égale à la masse de gaz distribuable sur le créneau horaire C1, C2, C3, C4, C5, C6.

Chacun du premier équipement d'utilisateur 10-1, du deuxième équipement d'utilisateur 10-2 et du troisième équipement d'utilisateur 10-3 est également configuré pour permettre l'identification de l'utilisateur, notamment auprès de la station 5.

Dans une forme de réalisation, chacun du premier équipement d'utilisateur 10-1, du deuxième équipement d'utilisateur 10-2 et du troisième équipement d'utilisateur 10-3 peut en outre être configuré pour indiquer si le réservoir d'un véhicule associé se trouve à droite ou à gauche dudit véhicule.

Chacun du premier équipement d'utilisateur 10-1, du deuxième équipement d'utilisateur 10-2 et du troisième équipement d'utilisateur 10-3 est configuré pour envoyer à la station 5, via le réseau de communication 30, une requête de réservation d'un créneau horaire C1, C2, C3, C4, C5, C6 et d'une masse de gaz à réserver.

Chacun du premier équipement d'utilisateur 10-1, du deuxième équipement d'utilisateur 10-2 et du troisième équipement d'utilisateur 10-3 peut par exemple être un smartphone ou un ordinateur ou un écran sur site, sur lequel une application dédiée à la réservation de GNC est installée.

Véhicules 20-1, 20-2, 20-3

Le premier véhicule 20-1 est associé au premier équipement d'utilisateur 10-1 et est caractérisé par une première pression maximum de réservoir prédéterminée correspondant à la pression maximale admissible dans le réservoir dudit premier véhicule 20-1.

Le deuxième véhicule 20-2 est associé au deuxième équipement d'utilisateur 10-2 et est caractérisé par une deuxième pression maximum de réservoir prédéterminée correspondant à la pression maximale admissible dans le réservoir dudit deuxième véhicule 20-2 et pouvant être égale à la première pression maximum de réservoir prédéterminée ou différente de la première pression maximum de réservoir prédéterminée.

Le troisième véhicule 20-3 est associé au troisième équipement d'utilisateur 10-3 et est caractérisé par une troisième pression maximum de réservoir prédéterminée correspondant à la pression maximale admissible dans le réservoir dudit troisième véhicule 20-3 et pouvant être égale à la première pression maximum de réservoir prédéterminée et/ou à la deuxième pression maximum prédéterminée ou différente de la première pression maximum de réservoir prédéterminée et/ou de la deuxième pression maximum prédéterminée.

Réseau de communication 30

Le réseau de communication 30 est configuré pour permettre la communication d'une part entre la station 5 et le premier équipement d'utilisateur 10-1, d'autre part entre la station 5 et le deuxième équipement d'utilisateur 10-2 et par ailleurs entre la station 5 et le troisième équipement d'utilisateur 10-3.

Le réseau de communication 30 comprend des bases de données et un mode de communication permettant l'échange d'un nombre important de données entre les modules de gestion 54 de différentes stations 5 et tous les équipements utilisateurs 10-1, 10-2, 10-3 en temps réel.

Le réseau de communication 30 peut par exemple être un réseau de communication de type 4G ou 5G, un réseau Wifi, un réseau Bluetooth®, un réseau filaire ou tout type de réseau adapté.

Réseau de distribution de gaz naturel 40

Le réseau de distribution de gaz naturel 40 permet de fournir un flux de gaz naturel au module de compression 51 de la station 5 afin que ledit module de compression 51 le comprime en un Gaz Naturel Comprimé à la pression de consigne.

**Mise en œuvre**

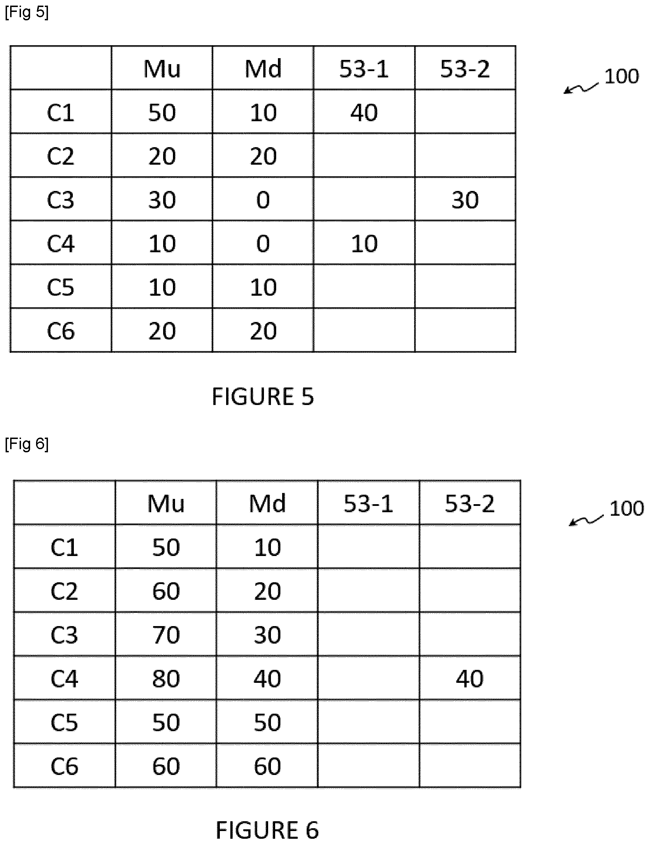

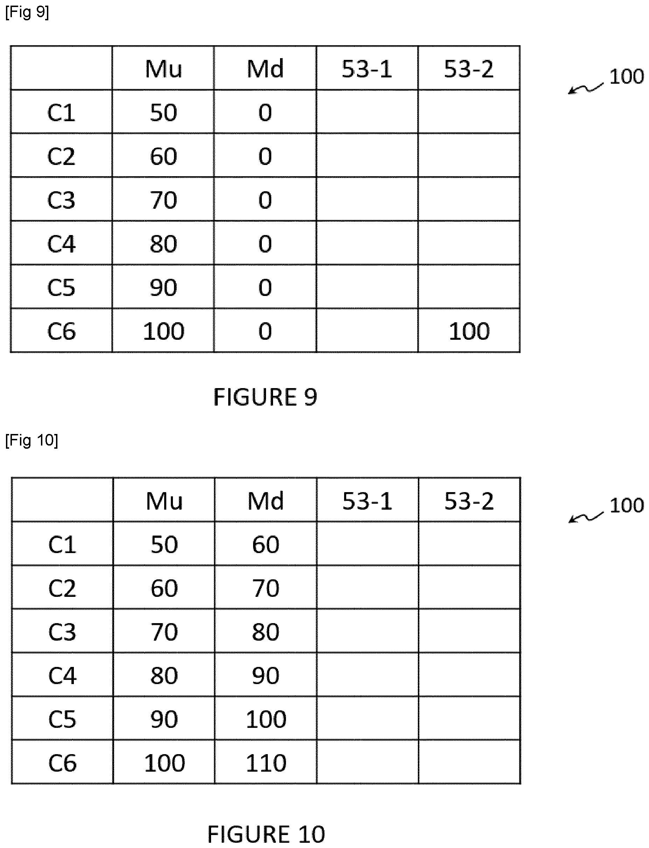

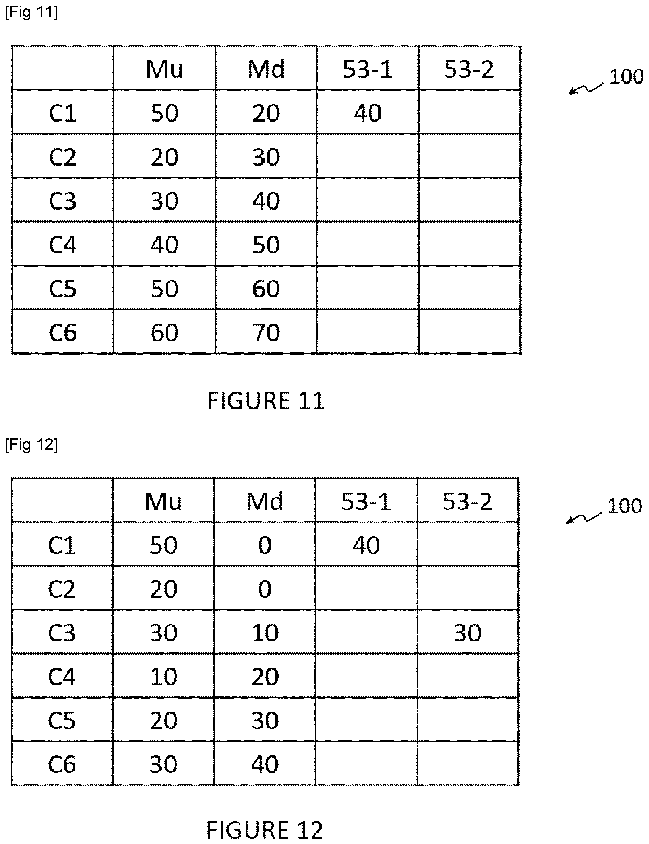

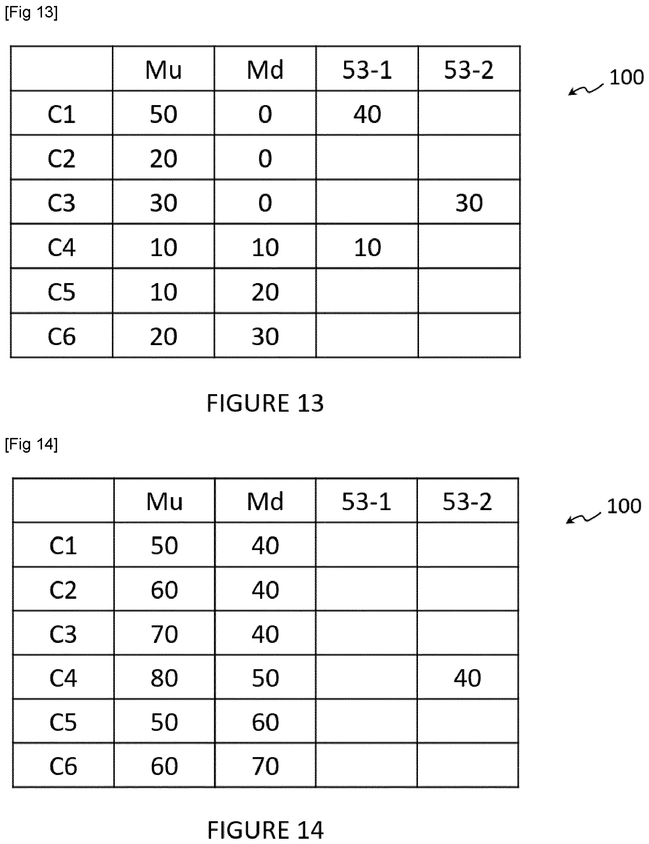

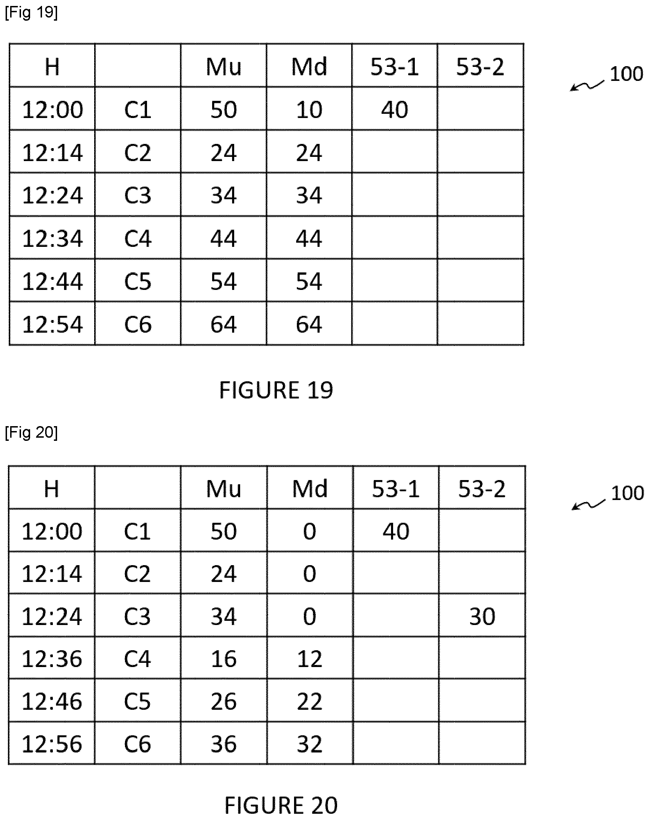

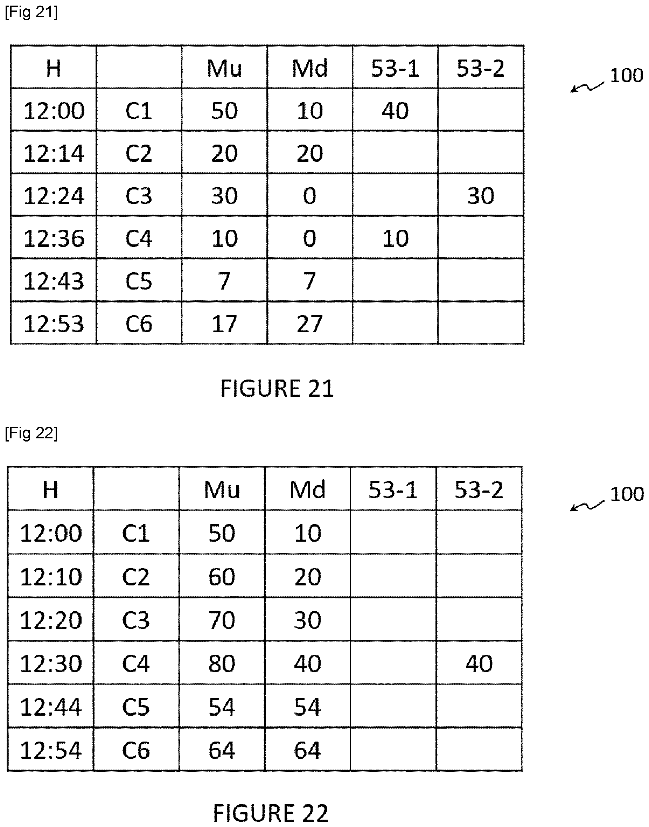

On a représenté à la figure 2 un exemple de tableau de planification dynamique 100 de la station 5 en l'absence de réservation de gaz. Les figures 3 à 5 illustrent un premier exemple de mise en œuvre du procédé selon l'invention, par la première forme de réalisation du système 1 décrite ci-avant, avec des créneaux horaires de durée fixe. Les figures 6 à 8 illustrent un deuxième exemple de mise en œuvre du procédé selon l'invention, par la première forme de réalisation du système 1 décrite ci-avant, avec des créneaux horaires de durée fixe. La figure 9 illustre un troisième exemple de mise en œuvre du procédé selon l'invention, par la première forme de réalisation du système 1 décrite ci-avant, avec des créneaux horaires de durée fixe. On a représenté à la figure 10 un autre exemple de tableau de planification dynamique 100 de la station 5 en l'absence de réservation de gaz. Les figures 11 à 13 illustrent un quatrième exemple de mise en œuvre du procédé selon l'invention, par la deuxième forme de réalisation du système 1 décrite ci-avant, avec des créneaux horaires de durée fixe. Les figures 14 à 16 illustrent un cinquième exemple de mise en œuvre du procédé selon l'invention, par la deuxième forme de réalisation du système 1 décrite ci-avant, avec des créneaux horaires de durée fixe. La figure 17 illustre un sixième exemple de mise en œuvre du procédé selon l'invention, par la deuxième forme de réalisation du système 1 décrite ci-avant, avec des créneaux horaires de durée fixe. On a représenté à la figure 18 un autre exemple de tableau de planification dynamique 100 de la station 5, en l'absence de réservation de gaz avec une indication horaire des créneaux. Les figures 19 à 21 illustrent un septième exemple de mise en œuvre du procédé selon l'invention, par la première forme de réalisation du système 1 décrite ci-avant, avec des créneaux horaires de durée variable. Les figures 22 à 24 illustrent un huitième exemple de mise en œuvre du procédé selon l'invention, par la première forme de réalisation du système 1 décrite ci-avant, avec des créneaux horaires de durée variable. La figure 25 illustre un neuvième exemple de mise en œuvre du procédé selon l'invention, par la première forme de réalisation du système 1 décrite ci-avant, avec des créneaux horaires de durée variable. Les figures 26 à 28 illustrent un dixième exemple de mise en œuvre du procédé selon l'invention, par la deuxième forme de réalisation du système 1 décrite ci-avant, avec des créneaux horaires de durée fixe subdivisibles.

Le tableau de planification dynamique 100 représente un ensemble de données stockées dans la zone mémoire du module de gestion 54.

Le tableau de planification dynamique 100 comporte une série de créneaux horaires C1, C2, C3, C4, C5, C6 pouvant être alloués à un ensemble de véhicules pour la distribution de Gaz Naturel Comprimé (GNC), en l'occurrence au premier véhicule 20-1, au deuxième véhicule 20-1 et au troisième véhicule 20-3. Dans les exemples ci-après, seuls six créneaux horaires C1, C2, C3, C4, C5, C6 sont illustrés et utilisés par souci de clarté mais il va de soi que le tableau de planification dynamique 100 pourrait comporter moins ou plus de six créneaux horaires C1, C2, C3, C4, C5, C6.

Chaque créneau horaire C1, C2, C3, C4, C5, C6 est associé à une masse de gaz utile et à une masse de gaz distribuable calculée par le module de gestion 54. Plusieurs véhicules 20-1, 20-2, 20-3 peuvent être servis sur un même créneau horaire C1, C2, C3, C4, C5, C6 si la masse de gaz distribuable est suffisante.

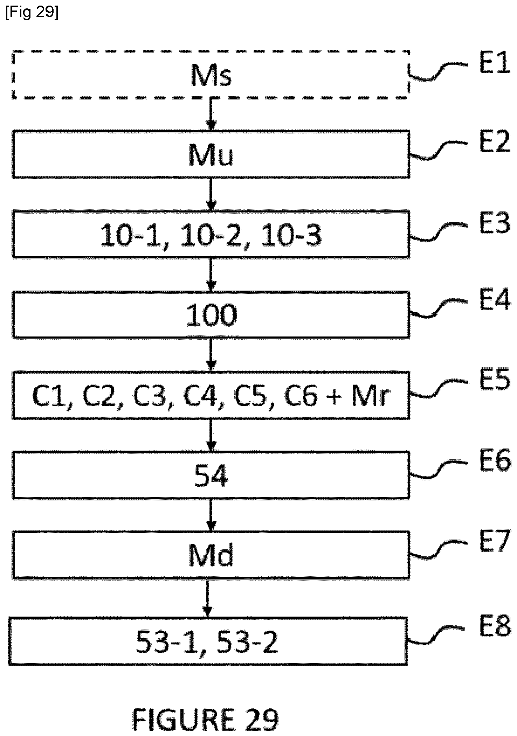

La figure 29 illustre un mode de réalisation du procédé selon l'invention.

Tout d'abord, optionnellement, le module de gestion 54 peut commander le fonctionnement du module de compression 51 afin de remplir au moins partiellement le module de stockage 52

Optionnellement, le module de gestion 54 peut déterminer la masse de gaz stocké Ms dans le module de stockage 52 dans une étape E1.

Ensuite, dans une étape E2, le module de gestion 54 calcule la masse de gaz utile Mu pouvant être distribuée aux véhicules 20-1, 20-2, 20-3 à partir de la masse du gaz stocké déterminée et d'une pression prédéterminée correspondant soit à la pression maximale admissible dans le réservoir des véhicules 20-1, 20-2, 20-3 associés aux équipements d'utilisateur 10-1, 10-2, 10-3, soit à la pression ou aux différentes pressions des bouteilles de stockage du module de stockage 52.

Lorsqu'il veut réserver du gaz, un équipement d'utilisateur 10-1, 10-2, 10-3 se connecte à la station 5 dans une étape E3 afin d'obtenir et visualiser le tableau de planification dynamique 100.

Dans ce cas, le module de gestion 54 envoie dans une étape E4 à l'équipement d'utilisateur 10-1, 10-2, 10-3 ayant fait la requête, via le réseau de communication 30, le tableau de planification dynamique 100 qui liste l'ensemble de créneaux horaires C1, C2, C3, C4, C5, C6 pour distribuer du Gaz Naturel Comprimé et, pour chaque créneau horaire C1, C2, C3, C4, C5, C6, la masse de gaz distribuable sur ledit créneau horaire C1, C2, C3, C4, C5, C6.

L'équipement d'utilisateur 10-1, 10-2, 10-3 envoie dans une étape E5 via le réseau de communication 30 une requête de réservation d'un créneau horaire C1, C2, C3, C4, C5, C6 et d'une masse de gaz à réserver, ladite masse de gaz à réserver (requise) Mr étant inférieure ou égale à la masse de gaz distribuable sur le créneau horaire C1, C2, C3, C4, C5, C6.

Le module de gestion 54 reçoit la requête de réservation dans une étape E6 et calcule dans une étape E7 la masse de gaz distribuable sur chacun des créneaux horaires C1, C2, C3, C4, C5, C6 à partir de la masse de gaz utile calculée et de la masse de gaz à réserver reçue afin de mettre à jour la masse de gaz distribuable sur chaque créneau horaire C1, C2, C3, C4, C5, C6.

Lorsque le véhicule qui a réservé une masse de gaz se présente pendant le créneau horaire C1, C2, C3, C4, C5, C6 réservé au distributeur 53-1, 53-2, le module de gestion 54 commande le distributeur 53-1, 53-2 afin d'autoriser la distribution de la masse de gaz réservée dans une étape E8.

Exemples

Dix exemples de mise en œuvre du procédé ci-dessus vont maintenant être décrits. Dans ces exemples, on utilise les pressions des bouteilles de stockage. La pression prédéterminée du contenant basse-pression $P_{BP}$ est de 180 bars, la pression prédéterminée du contenant moyenne-pression $P_{MP}$ est de 200 bars et la pression prédéterminée du contenant haute-pression $P_{HP}$ est de 220 bars.

La vitesse de remplissage du module de stockage 52, notamment des bouteilles de stockage, et donc la masse utile Mu distribuable, dépendent du débit de compression Qcomp appliqué par le module de compression 51.

Dans cet exemple, on considère en prérequis que le module de stockage 52 est rempli au moins partiellement préalablement au créneau horaire C1. Dans cet exemple, il est considéré que le module de stockage 52 comporte, à l'instant initial du premier créneau horaire C1, une masse de gaz stocké à la pression de consigne de 300 bars correspondant à une masse utile et distribuable aux véhicules 20-1, 20-2, 20-3 de 50 kg sur chacune du premier distributeur 53-1 et du deuxième distributeur 53-2 (i.e. la masse utile Mu et la masse distribuable sont identiques et égales à 50 kg).

Dans les exemples décrits ci-après, le débit de compression est de 60 kg/h.

Dans le premier exemple, le deuxième exemple et le troisième exemple, la durée d'un créneau horaire C1, C2, C3, C4, C5, C6 est fixe et égale à 10 min. La masse du gaz comprimé entrant dans le module de stockage 52 depuis le module de compression 51 augmente de 10 kg à chaque créneau horaire C1, C2, C3, C4, C5, C6. Il en résulte que la masse de gaz compressé entrant dans le module de stockage 52 est de 60 kg en une heure et que la masse de gaz sortant du module de stockage 52 dans le même intervalle de temps d'une heure correspond à la masse de gaz distribuée par le premier distributeur 53-1 et par le deuxième distributeur 53-2 sur les créneaux horaires C1, C2, C3, C4, C5, C6 couvrant ladite heure.

Dans le quatrième exemple, le cinquième exemple et le sixième exemple, la durée d'un créneau horaire C1, C2, C3, C4, C5, C6 est fixe et peut être subdivisée en sous-créneaux.

Dans le septième exemple, le huitième exemple et le neuvième exemple, la durée des créneaux horaires C1, C2, C3, C4, C5, C6 est variable et dépend de la quantité et du débit de gaz réservé et délivré sur chaque créneau horaire C1, C2, C3, C4, C5, C6.

Dans tous les cas, à un instant donné, la masse de gaz utile correspond à la masse du gaz stocké à une pression suffisante pour remplir des réservoirs de véhicules 20-1, 20-2, 20-3 comme expliqué ci-avant. La masse de gaz distribuable à un instant donné correspond à la masse de gaz utile à laquelle on soustrait la masse de gaz déjà réservée. Comme décrit précédemment, la masse de gaz utile peut être estimée sur un créneau horaire ultérieur connaissant le débit de gaz comprimé entrant dans le module de stockage 52.

Premier exemple (figures 2 à 5)

L'utilisateur du premier véhicule 20-1 se connecte tout d'abord à la station 5 avant le début du premier créneau horaire C1 via l'application dédiée installée sur son smartphone. En référence à la figure 2, l'utilisateur du premier véhicule 20-1 constate que 50 kg de gaz sont distribuables sur le premier créneau horaire C1, 60 kg de gaz sont distribuables sur le deuxième créneau horaire C2, 70 kg de gaz sont distribuables sur le troisième créneau horaire C3, 80 kg de gaz sont distribuables sur le quatrième créneau horaire C4, 90 kg de gaz sont distribuables sur le cinquième créneau horaire C5 et 100 kg de gaz sont distribuables sur le sixième créneau horaire C6.

Le réservoir de sa camionnette utilitaire ayant une capacité totale de 100 kg mais étant encore rempli à moitié, il décide de ne réserver que 40 kg de gaz. Il sélectionne donc dans l'application le premier créneau horaire C1 et indique qu'il souhaite réserver une masse de gaz de 40 kg au premier distributeur 53-1 sur ce premier créneau horaire C1. A cet instant, le module de gestion 54 modifie le tableau de planification dynamique 100 afin de retirer les 40 kg de gaz réservé de l'offre distribuable (figure 3).

L'utilisateur du premier véhicule 20-1 se présente au premier distributeur 53-1 pendant le premier créneau horaire C1 et collecte les 40 kg réservés, de préférence après identification, par exemple via un terminal utilisateur de la station ou via l'application installée sur son smartphone (équipement d'utilisateur 10-1), de préférence via un code secret.

Pendant la durée du premier créneau horaire C1, 10 kg de gaz comprimé entrent dans le module de stockage 52 de sorte que la masse de gaz distribuable au début du deuxième créneau horaire C2 soit de 20 kg (10 kg distribuables au début du premier créneau horaire C1 et non utilisés par le premier véhicule 20-1 et 10 kg produits pendant le premier créneau horaire C1).

L'utilisateur du deuxième véhicule 20-2 se connecte à la station 5 via l'application dédiée installée sur son smartphone après que l'utilisateur du premier véhicule 20-1 ait réservé sa masse de gaz. En référence à la figure 3, l'utilisateur du deuxième véhicule 20-2 constate que 30 kg de gaz sont distribuables sur le troisième créneau horaire C3 et décide de les réserver sur le deuxième distributeur 53-2. Une fois la réservation effectuée, comme illustré à la figure 4, il s'avère qu'il n'est plus possible de réserver de gaz sur le premier créneau horaire C1, le deuxième créneau horaire C2 ou le troisième créneau horaire C3. L'utilisateur du deuxième véhicule 20-2 se présente au deuxième distributeur 53-2 pendant le troisième créneau horaire C3 et collecte les 30 kg réservés, de préférence après identification, par exemple via un terminal utilisateur de la station ou via l'application installée sur son smartphone (équipement d'utilisateur 10-2), de préférence via un code secret.

Aussi, lorsque l'utilisateur du troisième véhicule 20-3 se connecte à la station 5 via son équipement d'utilisateur 10-3 et le réseau de communication 30, après que l'utilisateur du deuxième véhicule 20-2 ait réservé sa masse de gaz, il constate qu'il ne peut que réserver 10 kg de gaz sur le quatrième créneau horaire C4 ou bien 20 kg de gaz sur le cinquième créneau horaire C5 ou encore 30 kg de gaz sur le sixième créneau horaire C6.

L'utilisateur du troisième véhicule 20-3 décide de réserver 10 kg de gaz au premier distributeur 53-1 sur le quatrième créneau horaire C4 (figure 5) et se présente donc au premier distributeur 53-1 pendant le quatrième créneau horaire C4 et collecte les 10 kg réservés, de préférence après identification, par exemple via un terminal utilisateur de la station ou via l'application installée sur son smartphone (équipement d'utilisateur 10-3), de préférence via un code secret.

Deuxième exemple (figures 2 et 6 à 8)

L'utilisateur du premier véhicule 20-1 se connecte à la station 5 à un instant antérieur au quatrième créneau horaire C4. En référence à la figure 2, l'utilisateur du premier véhicule 20-1 constate que 50 kg de gaz sont distribuables sur le premier créneau horaire C1, 60 kg de gaz sont distribuables sur le deuxième créneau horaire C2, 70 kg de gaz sont distribuables sur le troisième créneau horaire C3, 80 kg de gaz sont distribuables sur le quatrième créneau horaire C4, 90 kg de gaz sont distribuables sur le cinquième créneau horaire C5 et 100 kg de gaz sont distribuables sur le sixième créneau horaire C6.

Il décide de réserver 40 kg de gaz sur le deuxième distributeur 53-2 pendant le quatrième créneau horaire C4. A cet instant, le module de gestion 54 modifie le tableau de planification dynamique 100 afin de retirer les 40 kg de gaz réservé de l'offre distribuable (figure 6).

Lorsque l'utilisateur du deuxième véhicule 20-2 se connecte à la station 5 pour réserver du gaz, il constate qu'il peut réserver de 10 à 60 kg de gaz sur chacun des six créneaux horaires C1, C2, C3, C4, C5, C6 respectivement.

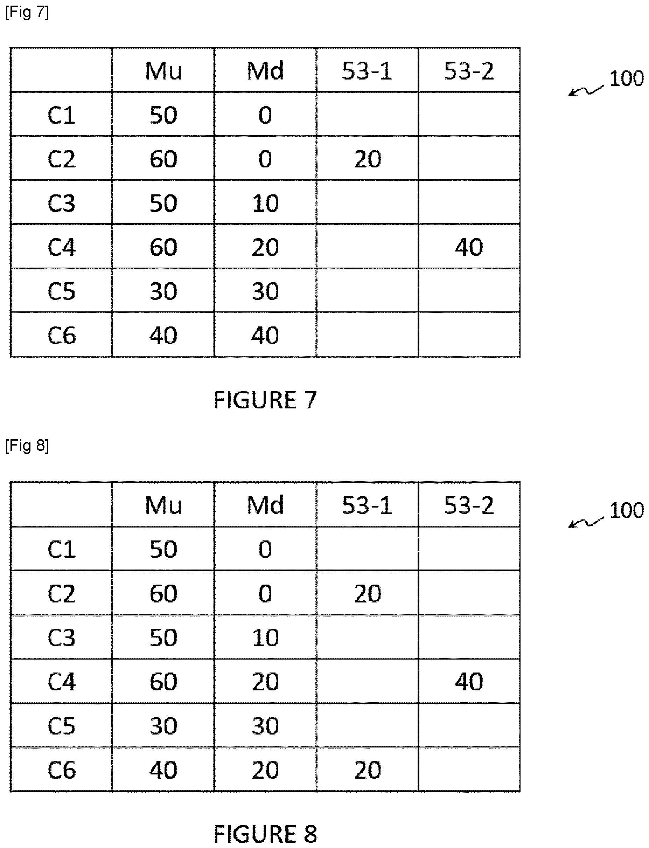

Il décide de réserver 20 kg au premier distributeur 53-1 sur le deuxième créneau horaire C2 (figure 7), ce qui a pour effet de rendre la masse de gaz distribuable sur le premier créneau horaire C1 et sur le deuxième créneau horaire C2 nulle mais aussi de diminuer la masse de gaz distribuable sur le troisième créneau horaire C3 (10 kg), sur le quatrième créneau horaire C4 (20 kg), sur le cinquième créneau horaire C5 (30 kg) et sur le sixième créneau horaire C6 (40 kg).

L'utilisateur du troisième véhicule 20-3 décide de réserver 20 kg de gaz au premier distributeur 53-1 sur le sixième créneau horaire C6 (figure 8).

Le premier véhicule 20-1, le deuxième véhicule 20-2 et le troisième véhicule 20-3 viennent ensuite s'approvisionner pendant le créneau horaire qu'ils ont réservé et sur le distributeur qu'ils ont réservé.

Troisième exemple (figures 2 et 9)

Lors de sa connexion à la station 5 via son équipement d'utilisateur 10-1, l'utilisateur du premier véhicule 20-1 constate qu'il peut réserver de 50 à 100 kg de gaz sur chacun des six créneaux horaires C1, C2, C3, C4, C5, C6 respectivement (figure 2).

Il décide de réserver 100 kg sur le sixième créneau horaire C6. Dans ce cas, il n'y a plus de gaz à réserver et donc à distribuer pour le deuxième véhicule 20-2 et le troisième véhicule 20-3 par la suite.

Quatrième exemple (figures 10 à 13)

L'utilisateur du premier véhicule 20-1 se connecte tout d'abord à la station 5 avant le début du premier créneau horaire C1 via l'application dédiée installée sur son smartphone. En référence à la figure 10, l'utilisateur du premier véhicule 20-1 constate que 60 kg de gaz sont distribuables sur le premier créneau horaire C1, 70 kg de gaz sont distribuables sur le deuxième créneau horaire C2, 80 kg de gaz sont distribuables sur le troisième créneau horaire C3, 90 kg de gaz sont distribuables sur le quatrième créneau horaire C4, 100 kg de gaz sont distribuables sur le cinquième créneau horaire C5 et 110 kg de gaz sont distribuables sur le sixième créneau horaire C6.

Le réservoir de sa camionnette utilitaire ayant une capacité totale de 100 kg mais étant encore rempli à moitié, il décide de ne réserver que 40 kg de gaz. Il sélectionne donc dans l'application le premier créneau horaire C1 et indique qu'il souhaite réserver une masse de gaz de 40 kg au premier distributeur 53-1 sur ce premier créneau horaire C1. A cet instant, le module de gestion 54 modifie le tableau de planification dynamique 100 afin de retirer les 40 kg de gaz réservé de l'offre distribuable (figure 11).

L'utilisateur du premier véhicule 20-1 se présente au premier distributeur 53-1 pendant le premier créneau horaire C1 et collecte les 40 kg réservés, de préférence après identification, par exemple via un terminal utilisateur de la station ou via l'application installée sur son smartphone (équipement d'utilisateur 10-1), de préférence via un code secret.

Pendant la durée du premier créneau horaire C1, 10 kg de gaz comprimé entrent dans le module de stockage 52 de sorte que la masse de gaz distribuable au début du deuxième créneau horaire C2 soit de 20 kg (10 kg distribuables au début du premier créneau horaire C1 et non utilisés par le premier véhicule 20-1 et 10 kg produits pendant le premier créneau horaire C1).

L'utilisateur du deuxième véhicule 20-2 se connecte à la station 5 via l'application dédiée installée sur son smartphone après que l'utilisateur du premier véhicule 20-1 ait réservé sa masse de gaz. En référence à la figure 11, l'utilisateur du deuxième véhicule 20-2 constate que 40 kg de gaz sont distribuables sur le troisième créneau horaire C3 et décide de les réserver sur le deuxième distributeur 53-2. Une fois la réservation effectuée, comme illustré à la figure 12, il s'avère qu'il n'est plus possible de réserver de gaz sur le premier créneau horaire C1, ni sur le deuxième créneau horaire C2. L'utilisateur du deuxième véhicule 20-2 se présente au deuxième distributeur 53-2 pendant le troisième créneau horaire C3 et collecte les 30 kg réservés, de préférence après identification, par exemple via un terminal utilisateur de la station ou via l'application installée sur son smartphone (équipement d'utilisateur 10-2), de préférence via un code secret.

Aussi, lorsque l'utilisateur du troisième véhicule 20-3 se connecte à la station 5 via son équipement d'utilisateur 10-3 et le réseau de communication 30, après que l'utilisateur du deuxième véhicule 20-2 ait réservé sa masse de gaz, il constate qu'il ne peut que réserver 10 kg de gaz sur le troisième créneau C3 ou bien 20 kg sur le quatrième créneau horaire C4 ou bien 30 kg de gaz sur le cinquième créneau horaire C5 ou encore 40 kg de gaz sur le sixième créneau horaire C6 (figure 12).

L'utilisateur du troisième véhicule 20-3 décide de réserver 10 kg de gaz au premier distributeur 53-1 sur le quatrième créneau horaire C4 (figure 13) et se présente donc au premier distributeur 53-1 pendant le quatrième créneau horaire C4 et collecte les 10 kg réservés, de préférence après identification, par exemple via un terminal utilisateur de la station ou via l'application installée sur son smartphone (équipement d'utilisateur 10-3), de préférence via un code secret.

Cinquième exemple (figures 10 et 14 à 16)

L'utilisateur du premier véhicule 20-1 se connecte à la station 5 à un instant antérieur au quatrième créneau horaire C4. En référence à la figure 10, l'utilisateur du premier véhicule 20-1 constate que 60 kg de gaz sont distribuables sur le premier créneau horaire C1, 70 kg de gaz sont distribuables sur le deuxième créneau horaire C2, 80 kg de gaz sont distribuables sur le troisième créneau horaire C3, 90 kg de gaz sont distribuables sur le quatrième créneau horaire C4, 100 kg de gaz sont distribuables sur le cinquième créneau horaire C5 et 110 kg de gaz sont distribuables sur le sixième créneau horaire C6.

Il décide de réserver 40 kg de gaz sur le deuxième distributeur 53-2 pendant le quatrième créneau horaire C4. A cet instant, le module de gestion 54 modifie le tableau de planification dynamique 100 afin de retirer les 40 kg de gaz réservé de l'offre distribuable (figure 14).

Lorsque l'utilisateur du deuxième véhicule 20-2 se connecte à la station 5 pour réserver du gaz, il constate qu'il peut réserver 40 kg sur le premier créneau horaire C1, 40 kg sur le deuxième créneau horaire C2, 40 kg sur le troisième créneau horaire C3, 50 kg sur le quatrième créneau horaire C4, 60 kg sur le cinquième créneau horaire C5 et 70 kg sur le sixième créneau horaire C6.

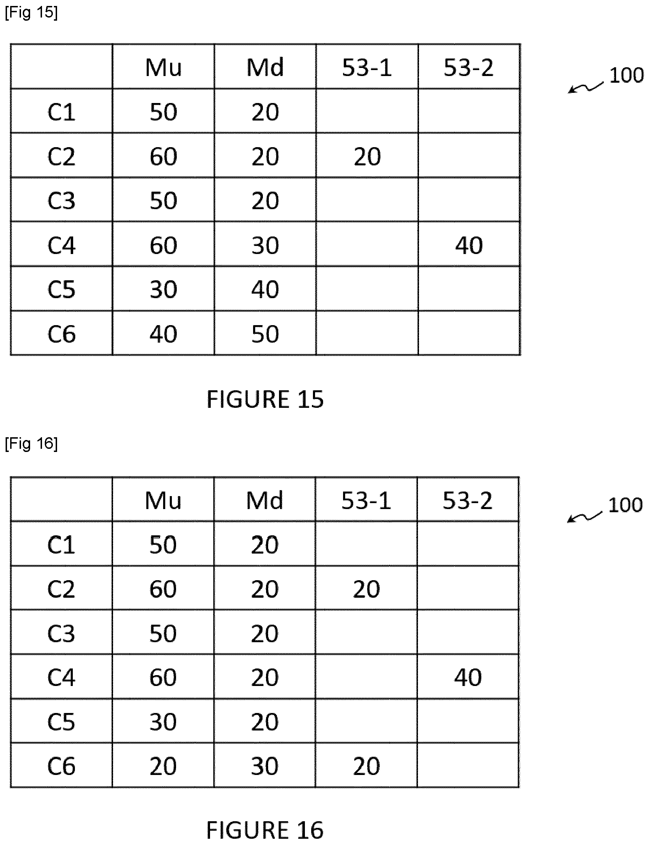

Il décide de réserver 20 kg au premier distributeur 53-1 sur le deuxième créneau horaire C2, ce qui a pour effet de rendre la masse de gaz distribuable sur le premier créneau horaire C1 et sur le deuxième créneau horaire C2 égale à 20 kg mais aussi de diminuer la masse de gaz distribuable sur le troisième créneau horaire C3 (20 kg), sur le quatrième créneau horaire C4 (30 kg), sur le cinquième créneau horaire C5 (40 kg) et sur le sixième créneau horaire C6 (50 kg), comme illustré sur la figure 15.

L'utilisateur du troisième véhicule 20-3 décide de réserver 20 kg de gaz au premier distributeur 53-1 sur le sixième créneau horaire C6 (figure 16), les masses de gaz distribuable étant alors mise à jour de nouveau.

Le premier véhicule 20-1, le deuxième véhicule 20-2 et le troisième véhicule 20-3 viennent ensuite s'approvisionner pendant le créneau horaire qu'ils ont réservé et sur le distributeur qu'ils ont réservé.

Sixième exemple (figures 10 et 17)

Lors de sa connexion à la station 5 via son équipement d'utilisateur 10-1, l'utilisateur du premier véhicule 20-1 constate qu'il peut réserver de 60 à 110 kg de gaz sur chacun des six créneaux horaires C1, C2, C3, C4, C5, C6 respectivement (figure 10).

Il décide de réserver 100 kg sur le sixième créneau horaire C6. Dans ce cas, il n'y a plus que 10 kg de gaz à réserver et donc à distribuer pour le deuxième véhicule 20-2 et le troisième véhicule 20-3 par la suite.

Septième exemple (figures 18 à 21)

L'utilisateur du premier véhicule 20-1 se connecte tout d'abord à la station 5 avant le début du premier créneau horaire C1 via l'application dédiée installée sur son smartphone. En référence à la figure 18, l'utilisateur du premier véhicule 20-1 constate que 50 kg de gaz sont distribuables à 12:00 sur le premier créneau horaire C1, 60 kg de gaz sont distribuables à 12:10 sur le deuxième créneau horaire C2, 70 kg de gaz sont distribuables à 12:20 sur le troisième créneau horaire C3, 80 kg de gaz sont distribuables à 12:30 sur le quatrième créneau horaire C4, 90 kg de gaz sont distribuables à 12:40 sur le cinquième créneau horaire C5 et 100 kg de gaz sont distribuables à 12:50 sur le sixième créneau horaire C6.

Le réservoir de sa camionnette utilitaire ayant une capacité totale de 100 kg mais étant encore rempli à moitié, il décide de ne réserver que 40 kg de gaz. Il sélectionne donc dans l'application le premier créneau horaire C1 et indique qu'il souhaite réserver une masse de gaz de 40 kg au premier distributeur 53-1 sur ce premier créneau horaire C1. A cet instant, le module de gestion 54 modifie le tableau de planification dynamique 100 afin de retirer les 40 kg de gaz réservé de l'offre distribuable tout en modifiant la durée des créneaux horaires C2, C3, C4, C5, C6 suivants (figure 19). En effet, connaissant la masse de gaz réservée sur le premier créneau horaire C1, le module de gestion 54 peut calculer la durée de la distribution de ladite masse de gaz en station 5, en connaissant le débit du pistolet du distributeur 53-1 sélectionné, et donc redéfinir les instants de début des créneaux suivants en temps réel. En l'occurrence, la durée de distribution de 40 kg de gaz, incluant les manœuvre et manipulations, étant estimée à 14 minutes, le module de gestion 54 décale les créneaux horaires C2, C3, C4, C5, C6 suivants étant donné qu'il n'y a pas d'autres réservations.

L'utilisateur du premier véhicule 20-1 se présente au premier distributeur 53-1 pendant le premier créneau horaire C1 et collecte les 40 kg réservés, de préférence après identification, par exemple via un terminal utilisateur de la station ou via l'application installée sur son smartphone (équipement d'utilisateur 10-1), de préférence via un code secret.

Pendant la durée du premier créneau horaire C1, 14 kg de gaz comprimé entrent dans le module de stockage 52 de sorte que la masse de gaz distribuable au début du deuxième créneau horaire C2 soit de 24 kg (10 kg restants distribuables sur le premier créneau horaire C1 car non utilisés par le premier véhicule 20-1 et 14 kg de gaz comprimé supplémentaires stockés pendant le premier créneau horaire C1).

L'utilisateur du deuxième véhicule 20-2 se connecte à la station 5 via l'application dédiée installée sur son smartphone après que l'utilisateur du premier véhicule 20-1 ait réservé sa masse de gaz. En référence à la figure 19, l'utilisateur du deuxième véhicule 20-2 constate que 34 kg de gaz sont distribuables sur le troisième créneau horaire C3 et décide d'en réserver 30 kg sur le deuxième distributeur 53-2 à 12:24. Le module de gestion 54 calcule alors la durée de la distribution correspondante et modifie les instants de début des créneaux horaires C4, C5, C6 suivants en fonction de ladite durée calculée comme précédemment.

Une fois la réservation effectuée, comme illustré à la figure 20, il s'avère qu'il n'est plus possible de réserver de gaz sur le premier créneau horaire C1, le deuxième créneau horaire C2 ou le troisième créneau horaire C3. L'utilisateur du deuxième véhicule 20-2 se présente au deuxième distributeur 53-2 à 12:24 au début du troisième créneau horaire C3 et collecte les 30 kg réservés, de préférence après identification, par exemple via un terminal utilisateur de la station ou via l'application installé sur son smartphone (équipement d'utilisateur 10-2), de préférence via un code secret.

Aussi, lorsque l'utilisateur du troisième véhicule 20-3 se connecte à la station 5 via son équipement d'utilisateur 10-3 et le réseau de communication 30, après que l'utilisateur du deuxième véhicule 20-2 ait réservé sa masse de gaz, il constate qu'il ne peut réserver que 12 kg de gaz sur le quatrième créneau horaire C4 ou bien 22 kg de gaz sur le cinquième créneau horaire C5 ou encore 32 kg de gaz sur le sixième créneau horaire C6.

L'utilisateur du troisième véhicule 20-3 décide de réserver 10 kg de gaz au premier distributeur 53-1 à 12:36 sur le quatrième créneau horaire C4 (figure 21). Ce faisant, le module de gestion 54 calcule alors la durée de la distribution correspondante (7 minutes) et modifie les instants de début des créneaux horaires C5, C6 suivants en fonction de ladite durée calculée comme précédemment.

L'utilisateur du troisième véhicule 20-3 se présente donc au premier distributeur 53-1 à 12:36 au début du quatrième créneau horaire C4 et collecte les 10 kg réservés, de préférence après identification, par exemple via un terminal utilisateur de la station ou via l'application installée sur son smartphone (équipement d'utilisateur 10-3), de préférence via un code secret.

Huitième exemple (figures 18 et 22 à 24)

L'utilisateur du premier véhicule 20-1 se connecte à la station 5 à un instant antérieur au quatrième créneau horaire C4. En référence à la figure 18, l'utilisateur du premier véhicule 20-1 constate que 50 kg de gaz sont distribuables à 12:00 sur le premier créneau horaire C1, 60 kg de gaz sont distribuables à 12:10 sur le deuxième créneau horaire C2, 70 kg de gaz sont distribuables à 12:20 sur le troisième créneau horaire C3, 80 kg de gaz sont distribuables à 12:30 sur le quatrième créneau horaire C4, 90 kg de gaz sont distribuables à 12:40 sur le cinquième créneau horaire C5 et 100 kg de gaz sont distribuables à 12:50 sur le sixième créneau horaire C6.

Il décide de réserver 40 kg de gaz sur le deuxième distributeur 53-2 à 12:30 sur le quatrième créneau horaire C4. A cet instant, le module de gestion 54 modifie le tableau de planification dynamique 100 afin de retirer les 40 kg de gaz réservé de l'offre distribuable (figure 22).

Lorsque l'utilisateur du deuxième véhicule 20-2 se connecte à la station 5 pour réserver du gaz, il constate qu'il peut réserver de 10 à 64 kg de gaz en fonction des créneaux horaires C1, C2, C3, C4, C5, C6.

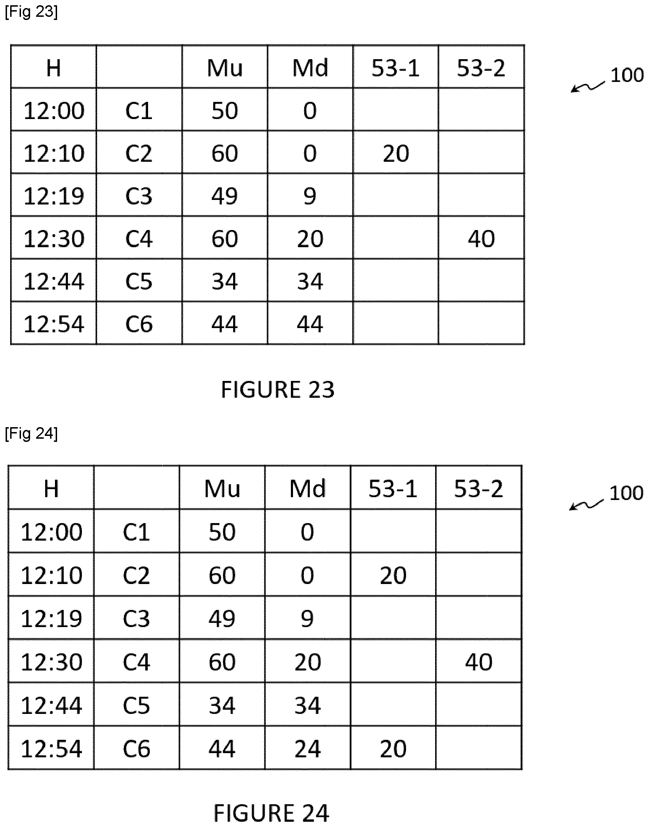

Il décide de réserver 20 kg au premier distributeur 53-1 sur le deuxième créneau horaire C2, ce qui a pour effet de rendre la masse de gaz distribuable sur le premier créneau horaire C1 et sur le deuxième créneau horaire C2 nulle mais aussi de diminuer la masse de gaz distribuable sur le troisième créneau horaire C3 (9 kg), sur le quatrième créneau horaire C4 (20 kg), sur le cinquième créneau horaire C5 (34 kg) et sur le sixième créneau horaire C6 (44 kg) mais aussi de modifier l'instant de début du troisième créneau horaire C3 à 12:19 (figure 23). L'instant de début du quatrième créneau horaire C4 est fixe car une réservation est déjà effectuée à cet horaire. La durée du créneau C3 est alors fixe, car déterminée par la réservation sur le créneau C4 et par la réservation sur le créneau C2.

L'utilisateur du troisième véhicule 20-3 décide de réserver 20 kg de gaz au premier distributeur 53-1 sur le sixième créneau horaire C6 (figure 24).

Le premier véhicule 20-1, le deuxième véhicule 20-2 et le troisième véhicule 20-3 viennent ensuite s'approvisionner pendant le créneau horaire qu'ils ont réservé et sur le distributeur qu'ils ont réservé.

On notera que, sur un même créneau horaire C1, C2, C3, C4, C5, C6, le deuxième sous-créneau ne peut être ouvert à la réservation que si le premier sous-créneau est suffisamment court pour qu'un utilisateur puisse venir s'approvisionner sur ledit deuxième sous-créneau.

Neuvième exemple (figures 18 et 25)

Lors de sa connexion à la station 5 via son équipement d'utilisateur 10-1, l'utilisateur du premier véhicule 20-1 constate (figure 18) qu'il peut réserver de 50 à 100 kg de gaz sur chacun des six créneaux horaires C1, C2, C3, C4, C5, C6 respectivement.

Il décide de réserver 90 kg sur le sixième créneau horaire C5 (figure 25). Dans ce cas, il n'y a plus de gaz à réserver et donc à distribuer sur les cinq premiers créneaux horaires C1, C2, C3, C4, C5 et il reste 7 kg à distribuer sur le sixième créneau horaire C6 dont l'instant de début a été avancé à 12:47.

Dixième exemple (figures 26 à 28)

Dans cet exemple, les créneaux horaires C1, C2, C3, C4, C5, C6 sont de durée fixe mais peuvent être subdivisés pour pouvoir servir plusieurs utilisateurs sur un même créneau horaire C1, C2, C3, C4, C5, C6.

L'utilisateur du premier véhicule 20-1 se connecte tout d'abord à la station 5 avant le début du premier créneau horaire C1 via l'application dédiée installée sur son smartphone. En référence à la figure 18, l'utilisateur du premier véhicule 20-1 constate que 50 kg de gaz sont distribuables à 12:00 sur le premier créneau horaire C1, 60 kg de gaz sont distribuables à 12:10 sur le deuxième créneau horaire C2, 70 kg de gaz sont distribuables à 12:20 sur le troisième créneau horaire C3, 80 kg de gaz sont distribuables à 12:30 sur le quatrième créneau horaire C4, 90 kg de gaz sont distribuables à 12:40 sur le cinquième créneau horaire C5 et 100 kg de gaz sont distribuables à 12:50 sur le sixième créneau horaire C6.

Le réservoir de sa camionnette utilitaire ayant une capacité totale de 100 kg mais étant encore rempli à moitié, il décide de ne réserver que 30 kg de gaz. Il sélectionne donc dans l'application le premier créneau horaire C1 et indique qu'il souhaite réserver une masse de gaz de 30 kg au premier distributeur 53-1 sur ce premier créneau horaire C1. A cet instant, le module de gestion 54 modifie le tableau de planification dynamique 100 afin de retirer les 30 kg de gaz réservé de l'offre distribuable tout en modifiant la durée des créneaux horaires C2, C3, C4, C5, C6 suivants (figure 26). En effet, connaissant la masse de gaz réservée sur le premier créneau horaire C1, le module de gestion 54 peut calculer la durée de la distribution de ladite masse de gaz en station 5, en connaissant le débit du pistolet du distributeur 53-1 sélectionné, et donc redéfinir les instants de début des créneaux suivants en temps réel. En l'occurrence, la durée de distribution de 30 kg de gaz, incluant les manœuvre et manipulations, étant estimée à 5 minutes, le module de gestion 54 subdivise le premier créneau horaire C1 en deux sous-créneaux C1a et C1b en réservant le premier sous-créneau C1A pour le premier véhicule 20-1 afin de pouvoir servir un autre véhicule sur le deuxième sous-créneau C1b.

L'utilisateur du premier véhicule 20-1 se présente au premier distributeur 53-1 pendant le premier créneau horaire C1a et collecte les 30 kg réservés, de préférence après identification, par exemple via un terminal utilisateur de la station ou via l'application installée sur son smartphone (équipement d'utilisateur 10-1), de préférence via un code secret.

L'utilisateur du deuxième véhicule 20-2 se connecte ensuite à la station 5 via l'application dédiée installée sur son smartphone après que l'utilisateur du premier véhicule 20-1 ait réservé sa masse de gaz. En référence à la figure 26, l'utilisateur du deuxième véhicule 20-2 constate que 30 kg de gaz sont distribuables sur deuxième sous-créneau C1b du premier créneau horaire à 12:05.

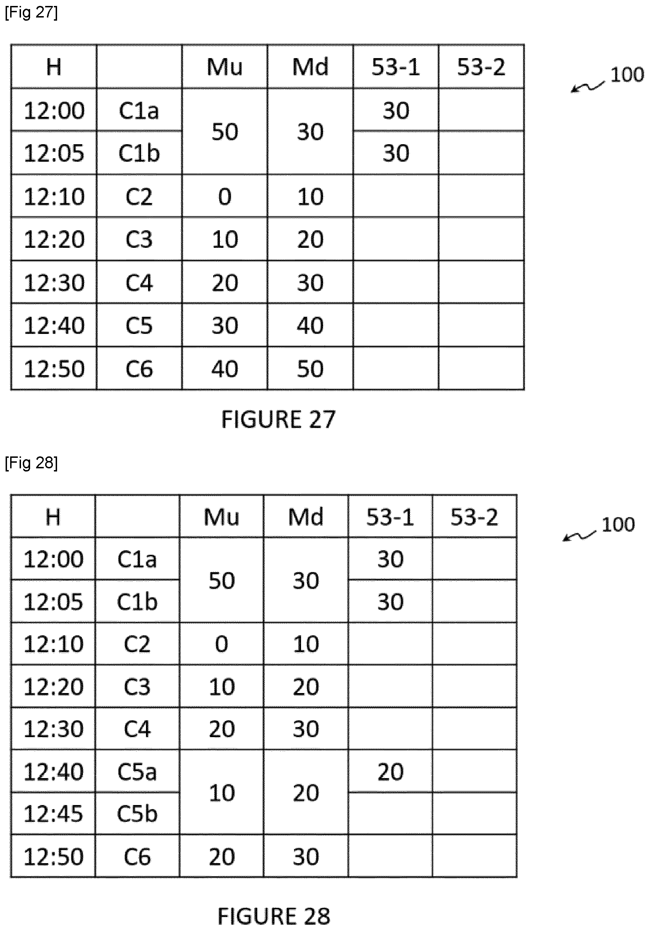

Une fois la réservation effectuée, comme illustré à la figure 27, il s'avère qu'il n'est plus possible de réserver de gaz sur le premier créneau horaire C1. L'utilisateur du deuxième véhicule 20-2 se présente au premier distributeur 53-1 à 12:05 au début du sous-créneau C1b et collecte les 30 kg réservés, de préférence après identification, par exemple via un terminal utilisateur de la station ou via l'application installée sur son smartphone (équipement d'utilisateur 10-2), de préférence via un code secret.

Aussi, lorsque l'utilisateur du troisième véhicule 20-3 se connecte à la station 5 via son équipement d'utilisateur 10-3 et le réseau de communication 30, après que l'utilisateur du deuxième véhicule 20-2 ait réservé sa masse de gaz, il constate qu'il peut réserver de 10 à 50 kg de GNC respectivement sur les cinq créneaux C2, C3, C4, C5, C6 entre 12:30 et 12:50.

L'utilisateur du troisième véhicule 20-3 décide de réserver 20 kg de GNC au premier distributeur 53-1 à 12:40 sur le cinquième créneau horaire C5 (figure 28). Ce faisant, le module de gestion 54 constate que 20 kg de GNC seront encore disponibles sur ledit cinquième créneau horaire C5 et subdivise le cinquième créneau horaire C5 en deux sous-créneaux C5a et C5b afin de pouvoir servir les 20 kg de GNC restants à un autre véhicule sur le deuxième sous-créneau C5b du cinquième créneau horaire C5.

L'utilisateur du troisième véhicule 20-3 se présente donc au premier distributeur 53-1 à 12:40 au début du cinquième créneau horaire C5 et collecte les 20 kg réservés, de préférence après identification, par exemple via un terminal utilisateur de la station ou via l'application installée sur son smartphone (équipement d'utilisateur 10-3), de préférence via un code secret.

*Addendum*

Dans une autre forme de réalisation, le système 1 peut comprendre un module de stockage 52 dédié par distributeur 53-1, 53-2, ces modules de stockage 52 étant gérés indépendamment les uns des autres par le module de gestion 54.

Dans une forme de réalisation, les véhicules 20-1, 20-2, 20-3 peuvent être configurés pour fournir la masse de carburant nécessaire pour réaliser le plein de leur réservoir à leur utilisateur de sorte qu'il réserve la quantité exacte pour réaliser le plein du réservoir. Les véhicules 20-1, 20-2, 20-3 peuvent aussi être configurés pour envoyer automatiquement la masse de carburant nécessaire à la station 5 via l'application de l'équipement d'utilisateur 10-1, 10-2, 10-3 associé afin de réserver la quantité exacte pour réaliser le plein du réservoir.

On notera que plusieurs véhicules 20-1, 20-2, 20-3 pourraient être associés à un même équipement d'utilisateur 10-1, 10-2, 10-3. Par exemple, une entreprise de transport routier peut vouloir centraliser les réservations de sa flotte au niveau d'un même opérateur administratif.

L'invention permet donc à la station 5 de gérer efficacement la masse de gaz stocké pour pouvoir la délivrer avec certitude aux utilisateurs en fonction de leurs réservations. Notamment, la réservation de masse de gaz à distribuer en fonction du temps permet d'optimiser la durée des créneaux horaires C1, C2, C3, C4, C5, C6 de remplissage des réservoirs.

## Revendications

1. Station (5) de distribution de carburant gazeux pour véhicules (20-1, 20-2, 20-3), notamment automobiles, chaque véhicule (20-1, 20-2, 20-3) étant associé à au moins un équipement d'utilisateur (10-1, 10-2, 10-3), ladite station (5) comprenant :

   - un module de compression (51) de gaz adapté pour être relié via son entrée d'aspiration à un réseau de distribution de gaz naturel (40) et pour comprimer le gaz naturel reçu dudit réseau (40) jusqu'à une pression de consigne,
   - un module de stockage (52) relié audit module de compression (51) et adapté pour stocker le gaz comprimé à au moins ladite pression de consigne,
   - un module de distribution (53) comprenant au moins un distributeur (54-1, 54-2) configuré pour remplir le réservoir des véhicules (20-1, 20-2, 20-3) à partir de gaz comprimé fourni par le module de stockage (52),
   - un module de gestion (54) comprenant une zone mémoire dans laquelle est enregistré un tableau de planification dynamique (100) comportant un ensemble de créneaux horaires (C1, C2, C3, C4, C5, C6), chaque créneau horaire (C1, C2, C3, C4, C5, C6) étant **caractérisé par** un identifiant, à une masse de gaz utile (Mu) et à une masse de gaz distribuable (Md), ledit module de gestion (54) étant configuré pour :

     - recevoir, via un réseau de communication (30), une requête de planning envoyée par un équipement d'utilisateur (10-1, 10-2, 10-3) pour obtenir le tableau de planification dynamique (100) de la station (5), ladite requête de planning comprenant l'identifiant dudit équipement d'utilisateur (10-1, 10-2, 10-3),
     - envoyer à l'équipement d'utilisateur (10-1, 10-2, 10-3), via ledit réseau de communication (30), le tableau de planification dynamique (100) de la station (5) dans lequel, chaque créneau horaire (C1, C2, C3, C4, C5, C6) est associé à une masse de gaz distribuable (Md) sur ledit créneau horaire (C1, C2, C3, C4, C5, C6),
     - recevoir, via le réseau de communication (30), une requête de réservation envoyée par l'équipement d'utilisateur (10-1, 10-2, 10-3) comprenant l'identifiant d'un créneau horaire (C1, C2, C3, C4, C5, C6) à réserver et une masse de gaz à réserver, ladite masse de gaz à réserver étant inférieure ou égale à la masse de gaz distribuable (Md) sur le créneau horaire (C1, C2, C3, C4, C5, C6),
     - calculer, pour chaque créneau horaire (C1, C2, C3, C4, C5, C6) postérieur au créneau horaire (C1, C2, C3, C4, C5, C6) réservé, une masse de gaz utile (Mu(t)) prévisionnelle à partir de la masse de gaz utile (Mu(t-1)) du créneau horaire (C1, C2, C3, C4, C5, C6) précédant le créneau horaire (C1, C2, C3, C4, C5, C6) réservé, de la durée ($\Delta$t) du créneau horaire (C1, C2, C3, C4, C5, C6) réservé et du débit de compression (Qcomp) du module de compression (51),
     - mettre à jour le tableau de planification dynamique (100) à partir des masses de gaz utiles (Mu(t)) prévisionnelles calculées,
- calculer, pour chaque créneau horaire (C1, C2, C3, C4, C5, C6) du tableau de planification dynamique (100), de la masse de gaz distribuable (Md) sur chacun des créneaux horaires (C1, C2, C3, C4, C5, C6) à partir de la masse de gaz utile prévisionnelle associée audit créneau horaire (C1, C2, C3, C4, C5, C6) et de la masse de gaz à réserver reçue,
- mettre à jour le tableau de planification dynamique (100) à partir des masses de gaz distribuables (Md) calculées,
- lorsque l'utilisateur se présente à la station (5) dans le créneau horaire (C1, C2, C3, C4, C5, C6) réservé, identifier sur site l'utilisateur de l'équipement d'utilisateur (10-1, 10-2, 10-3),
- distribuer à un véhicule (20-1, 20-2, 20-3) associé à l'équipement d'utilisateur (10-1, 10-2, 10-3), pendant le créneau horaire (C1, C2, C3, C4, C5, C6) réservé, la masse de gaz réservée par l'utilisateur identifié.

2. Station (5) selon la revendication 1, dans laquelle le module de gestion est configuré pour calculer la masse de gaz utile prévisionnelle Mu(t) pour un créneau horaire débutant à l'instant t, pour t variant de l'instant courant t0 à un instant futur prédéfini (t+n), est réalisé selon la formule suivante :

$$Mu(t) = Mu(t-1) - Mtot\_réservée(t-1) + \Delta t \times Qcomp$$

où Mtot_réservée(t-1) correspond à la masse totale de gaz réservée au créneau précédent, débutant à l'instant (t-1), $\Delta t$ correspond à la durée d'un créneau horaire et Qcomp correspond au débit du flux de gaz comprimé entrant dans le module de stockage (52) et n est un nombre entier naturel de créneaux horaires paramétrable.

3. Station (5) selon l'une quelconque des revendications précédentes, dans laquelle le module de gestion (54) est configuré pour calculer la masse de gaz distribuable Md(t) pour un créneau horaire débutant à l'instant t, pour t variant de l'instant courant t0 (présent) à un instant futur prédéfini (t+n), selon la formule suivante:

$$Md(t) = MIN(Mu(t+1 \text{ à } t+n)) - \Delta t \times Qcomp$$

où n est un nombre entier naturel de créneaux horaires paramétrable par l'exploitant de la station et MIN est une fonction mathématique qui détermine le minimum des valeurs de masse de gaz utile prévisionnelle sur la plage de temps qui est définie entre (t+1) et (t+n).

4. Station (5) selon l'une quelconque des revendications précédentes, dans laquelle, le module de gestion (54) est configuré pour calculer la masse de gaz utile réelle (Mu_réelle) stockée dans le module de stockage (52) à l'instant courant, pour remplacer la masse de gaz utile (Mu(t)) prévisionnelle du créneau horaire (C1, C2, C3, C4, C5, C6) courant par la masse de gaz utile réelle (Mu_réelle) calculée et pour recalculer automatiquement la masse de gaz utile prévisionnelle pour chaque créneau horaire postérieur à l'instant courant à partir de la valeur de masse de gaz utile réelle affectée à la masse de gaz utile prévisionnelle courante.

5. Station (5) selon l'une quelconque des revendications précédentes, dans laquelle, le module de gestion (54) est configuré pour valider l'identification de l'utilisateur, notamment afin de l'autoriser à remplir son réservoir.

6. Equipement d'utilisateur (10-1, 10-2, 10-3) pour la réservation de carburant gazeux pour véhicule (20-1, 20-2, 20-3), notamment automobile, ledit équipement d'utilisateur (10-1, 10-2, 10-3) étant configuré pour communiquer via un réseau de communication (30) avec au moins une station (5) selon l'une quelconque des revendications précédentes et pour envoyer, via ledit réseau de communication (30), une requête de planning pour obtenir le tableau de planification dynamique (100) de la station (5), ladite requête de planning comprenant l'identifiant dudit équipement d'utilisateur (10-1, 10-2, 10-3), pour recevoir via le réseau de communication (30) le tableau de planification dynamique (100) géré par la station (5) avec, pour chaque créneau horaire (C1, C2, C3, C4, C5, C6), la masse de gaz distribuable (Md) sur ledit créneau horaire (C1, C2, C3, C4, C5, C6), pour permettre la sélection par un utilisateur d'un créneau horaire (C1, C2, C3, C4, C5, C6) et la saisie d'une masse de gaz à réserver par ledit utilisateur, ladite masse de gaz à réserver étant inférieure ou égale à la masse de gaz distribuable (Md) sur le créneau horaire (C1, C2, C3, C4, C5, C6), et pour envoyer via le réseau de communication (30) une requête de réservation comprenant l'identifiant d'un créneau horaire (C1, C2, C3, C4, C5, C6) à réserver et une masse de gaz à réserver, ladite masse de gaz à réserver étant inférieure ou égale à la masse de gaz distribuable (Md) sur le créneau horaire (C1, C2, C3, C4, C5, C6).

7. Système (1) de distribution de carburant gazeux pour véhicule (20-1, 20-2, 20-3), notamment automobile, ledit système (1) comprenant :

- au moins une station (5) selon l'une quelconque des revendications 1 à 5,
- au moins un équipement d'utilisateur (10-1, 10-2, 10-3) selon la revendication précédente,
- au moins un véhicule (20-1, 20-2, 20-3) associé audit équipement d'utilisateur (10-1, 10-2, 10-3) et **caractérisé par** une pression maximum de réservoir prédéterminée correspondant à la pression maximale admissible dans le réservoir dudit véhicule (20-1, 20-2, 20-3),
- un réseau de communication (30) configuré pour permettre la communication entre l'au moins une station (5) et l'au moins un équipement d'utilisateur (10-1, 10-2, 10-3).

8. Procédé de distribution de carburant gazeux pour véhicule (20-1, 20-2, 20-3), notamment automobile, ledit procédé, mis en œuvre par une station (5) selon l'une quelconque des revendications 1 à 5, comprenant les étapes de :

- réception, via un réseau de communication (30), d'une requête de planning envoyée par un équipement d'utilisateur (10-1, 10-2, 10-3) pour obtenir le tableau de planification dynamique (100) de la station (5),
- envoi audit équipement d'utilisateur (10-1, 10-2, 10-3), via ledit réseau de communication (30), du tableau de planification dynamique (100) de la station (5) dans lequel, chaque créneau horaire (C1, C2, C3, C4, C5, C6) est associé à une masse de gaz distribuable sur ledit créneau horaire (C1, C2, C3, C4, C5, C6),
- réception, via le réseau de communication (30), d'une requête de réservation d'un créneau horaire (C1, C2, C3, C4, C5, C6) et d'une masse de gaz à réserver envoyée par l'équipement d'utilisateur (10-1, 10-2, 10-3), ladite masse de gaz à réserver étant inférieure ou égale à la masse de gaz distribuable sur le créneau horaire (C1, C2, C3, C4, C5, C6),
- calcul, pour chaque créneau horaire (C1, C2, C3, C4, C5, C6) postérieur au créneau horaire (C1, C2, C3, C4, C5, C6) réservé, d'une masse de gaz utile prévisionnelle à partir de la masse de gaz utile du créneau horaire (C1, C2, C3, C4, C5, C6) précédant le créneau horaire (C1, C2, C3, C4, C5, C6) réservé, de la durée du créneau horaire (C1, C2, C3, C4, C5, C6) réservé et du débit de compression du module de compression (51),
- mise à jour du tableau de planification dynamique (100) à partir des masses de gaz utiles prévisionnelles calculées,
- calcul, pour chaque créneau horaire (C1, C2, C3, C4, C5, C6) du tableau de planification dynamique, de la masse de gaz distribuable sur chacun des créneaux horaires (C1, C2, C3, C4, C5, C6) à partir de la masse de gaz utile prévisionnelle associée audit créneau horaire (C1, C2, C3, C4, C5, C6) et de la masse de gaz à réserver reçue,
- mise à jour du tableau de planification dynamique (100) à partir des masses de gaz distribuables calculées,
- identification sur site de l'utilisateur de l'équipement d'utilisateur (10-1, 10-2, 10-3) dans le créneau horaire (C1, C2, C3, C4, C5, C6) réservé,
- distribution au véhicule (20-1, 20-2, 20-3) associé à l'équipement d'utilisateur (10-1, 10-2, 10-3) de l'utilisateur identifié, pendant le créneau horaire (C1, C2, C3, C4, C5, C6) réservé, de la masse de gaz réservée.

9. Procédé selon la revendication précédente, dans laquelle le calcul de la masse de gaz utile prévisionnelle Mu(t) pour un créneau horaire débutant à l'instant t, pour t variant de l'instant courant t0 (présent) à un instant futur prédéfini (t+n), est réalisé selon la formule suivante :

$$Mu(t) = Mu(t-1) - Mtot\_réservée(t-1) + \Delta t \times Qcomp$$

où Mtot_réservée(t-1) correspond à la masse totale de gaz réservée au créneau précédent, débutant à l'instant (t-1), Δt correspond à la durée d'un créneau horaire, Qcomp correspond au débit du flux de gaz comprimé entrant dans le module de stockage (52), c'est-à-dire au débit du flux de gaz comprimé par le module de compression (51), et n est un nombre entier naturel de créneaux horaires paramétrable.

10. Procédé selon l'une quelconque des revendications 8 ou 9, comprenant en outre une étape de calcul de la masse de gaz distribuable Md(t) pour un créneau horaire débutant à l'instant t, pour t variant de l'instant courant t0 (présent) à un instant futur prédéfini (t+n), selon la formule suivante:

$$Md(t) = MIN(Mu(t+1 \text{ à } t+n)) - \Delta t \times Qcomp$$

où n est un nombre entier naturel de créneaux horaires paramétrable par l'exploitant de la station et MIN est une fonction mathématique qui détermine le minimum des valeurs de masse de gaz utile prévisionnelle sur la plage de temps qui est définie entre (t+1) et (t+n).

[Fig 1]

FIGURE 1

[Fig 2]

| | Mu | Md | 53-1 | 53-2 |
|---|---|---|---|---|
| C1 | 50 | 50 | | |
| C2 | 60 | 60 | | |
| C3 | 70 | 70 | | |
| C4 | 80 | 80 | | |
| C5 | 90 | 90 | | |
| C6 | 100 | 100 | | |

100

FIGURE 2

[Fig 3]

|  | Mu | Md | 53-1 | 53-2 |
|---|---|---|---|---|
| C1 | 50 | 10 | 40 |  |
| C2 | 20 | 20 |  |  |
| C3 | 30 | 30 |  |  |
| C4 | 40 | 40 |  |  |
| C5 | 50 | 50 |  |  |
| C6 | 60 | 60 |  |  |

~100

FIGURE 3

[Fig 4]

|  | Mu | Md | 53-1 | 53-2 |
|---|---|---|---|---|
| C1 | 50 | 0 | 40 |  |
| C2 | 20 | 0 |  |  |
| C3 | 30 | 0 |  | 30 |
| C4 | 10 | 10 |  |  |
| C5 | 20 | 20 |  |  |
| C6 | 30 | 30 |  |  |

~100

FIGURE 4

[Fig 5]

|     | Mu | Md | 53-1 | 53-2 |
| --- | --- | --- | --- | --- |
| C1 | 50 | 10 | 40 |     |
| C2 | 20 | 20 |     |     |
| C3 | 30 | 0  |     | 30 |
| C4 | 10 | 0  | 10 |     |
| C5 | 10 | 10 |     |     |
| C6 | 20 | 20 |     |     |

~ 100

FIGURE 5

[Fig 6]

|     | Mu | Md | 53-1 | 53-2 |
| --- | --- | --- | --- | --- |
| C1 | 50 | 10 |     |     |
| C2 | 60 | 20 |     |     |
| C3 | 70 | 30 |     |     |
| C4 | 80 | 40 |     | 40 |
| C5 | 50 | 50 |     |     |
| C6 | 60 | 60 |     |     |

~ 100

FIGURE 6

[Fig 7]

| | Mu | Md | 53-1 | 53-2 |
|---|---|---|---|---|
| C1 | 50 | 0 | | |
| C2 | 60 | 0 | 20 | |
| C3 | 50 | 10 | | |
| C4 | 60 | 20 | | 40 |
| C5 | 30 | 30 | | |
| C6 | 40 | 40 | | |

100

FIGURE 7

[Fig 8]

| | Mu | Md | 53-1 | 53-2 |
|---|---|---|---|---|
| C1 | 50 | 0 | | |
| C2 | 60 | 0 | 20 | |
| C3 | 50 | 10 | | |
| C4 | 60 | 20 | | 40 |
| C5 | 30 | 30 | | |
| C6 | 40 | 20 | 20 | |

100

FIGURE 8

[Fig 9]

| | Mu | Md | 53-1 | 53-2 |
|---|---|---|---|---|
| C1 | 50 | 0 | | |
| C2 | 60 | 0 | | |
| C3 | 70 | 0 | | |
| C4 | 80 | 0 | | |
| C5 | 90 | 0 | | |
| C6 | 100 | 0 | | 100 |

~ 100

FIGURE 9

[Fig 10]

| | Mu | Md | 53-1 | 53-2 |
|---|---|---|---|---|
| C1 | 50 | 60 | | |
| C2 | 60 | 70 | | |
| C3 | 70 | 80 | | |
| C4 | 80 | 90 | | |
| C5 | 90 | 100 | | |
| C6 | 100 | 110 | | |

~ 100

FIGURE 10

[Fig 11]

|  | Mu | Md | 53-1 | 53-2 |
|---|---|---|---|---|
| C1 | 50 | 20 | 40 |  |
| C2 | 20 | 30 |  |  |
| C3 | 30 | 40 |  |  |
| C4 | 40 | 50 |  |  |
| C5 | 50 | 60 |  |  |
| C6 | 60 | 70 |  |  |

~ 100

## FIGURE 11

[Fig 12]

|  | Mu | Md | 53-1 | 53-2 |
|---|---|---|---|---|
| C1 | 50 | 0 | 40 |  |
| C2 | 20 | 0 |  |  |
| C3 | 30 | 10 |  | 30 |
| C4 | 10 | 20 |  |  |
| C5 | 20 | 30 |  |  |
| C6 | 30 | 40 |  |  |

~ 100

## FIGURE 12

[Fig 13]

|      | Mu | Md | 53-1 | 53-2 |
|------|----|----|------|------|
| C1   | 50 | 0  | 40   |      |
| C2   | 20 | 0  |      |      |
| C3   | 30 | 0  |      | 30   |
| C4   | 10 | 10 | 10   |      |
| C5   | 10 | 20 |      |      |
| C6   | 20 | 30 |      |      |

~ 100

FIGURE 13

[Fig 14]

|      | Mu | Md | 53-1 | 53-2 |
|------|----|----|------|------|
| C1   | 50 | 40 |      |      |
| C2   | 60 | 40 |      |      |
| C3   | 70 | 40 |      |      |
| C4   | 80 | 50 |      | 40   |
| C5   | 50 | 60 |      |      |
| C6   | 60 | 70 |      |      |

~ 100

FIGURE 14

[Fig 15]

|     | Mu | Md | 53-1 | 53-2 |
| --- | --- | --- | --- | --- |
| C1 | 50 | 20 |    |    |
| C2 | 60 | 20 | 20 |    |
| C3 | 50 | 20 |    |    |
| C4 | 60 | 30 |    | 40 |
| C5 | 30 | 40 |    |    |
| C6 | 40 | 50 |    |    |

~ 100

FIGURE 15

[Fig 16]

|     | Mu | Md | 53-1 | 53-2 |
| --- | --- | --- | --- | --- |
| C1 | 50 | 20 |    |    |
| C2 | 60 | 20 | 20 |    |
| C3 | 50 | 20 |    |    |
| C4 | 60 | 20 |    | 40 |
| C5 | 30 | 20 |    |    |
| C6 | 20 | 30 | 20 |    |

~ 100

FIGURE 16

[Fig 17]

|     | Mu  | Md  | 53-1 | 53-2 |
| --- | --- | --- | ---- | ---- |
| C1  | 50  | 0   |      |      |
| C2  | 60  | 0   |      |      |
| C3  | 70  | 0   |      |      |
| C4  | 80  | 0   |      |      |
| C5  | 90  | 0   |      |      |
| C6  | 100 | 10  |      | 100  |

~ 100

FIGURE 17

[Fig 18]

| H     |     | Mu  | Md  | 53-1 | 53-2 |
| ----- | --- | --- | --- | ---- | ---- |
| 12:00 | C1  | 50  | 50  |      |      |
| 12:10 | C2  | 60  | 60  |      |      |
| 12:20 | C3  | 70  | 70  |      |      |
| 12:30 | C4  | 80  | 80  |      |      |
| 12:40 | C5  | 90  | 90  |      |      |
| 12:50 | C6  | 100 | 100 |      |      |

~ 100

FIGURE 18

[Fig 19]

| H | | Mu | Md | 53-1 | 53-2 |
|---|---|---|---|---|---|
| 12:00 | C1 | 50 | 10 | 40 | |
| 12:14 | C2 | 24 | 24 | | |
| 12:24 | C3 | 34 | 34 | | |
| 12:34 | C4 | 44 | 44 | | |
| 12:44 | C5 | 54 | 54 | | |
| 12:54 | C6 | 64 | 64 | | |

~ 100

FIGURE 19

[Fig 20]

| H | | Mu | Md | 53-1 | 53-2 |
|---|---|---|---|---|---|
| 12:00 | C1 | 50 | 0 | 40 | |
| 12:14 | C2 | 24 | 0 | | |
| 12:24 | C3 | 34 | 0 | | 30 |
| 12:36 | C4 | 16 | 12 | | |
| 12:46 | C5 | 26 | 22 | | |
| 12:56 | C6 | 36 | 32 | | |

~ 100

FIGURE 20

[Fig 21]

| H | | Mu | Md | 53-1 | 53-2 |
|---|---|---|---|---|---|
| 12:00 | C1 | 50 | 10 | 40 | |
| 12:14 | C2 | 20 | 20 | | |
| 12:24 | C3 | 30 | 0 | | 30 |
| 12:36 | C4 | 10 | 0 | 10 | |
| 12:43 | C5 | 7 | 7 | | |
| 12:53 | C6 | 17 | 27 | | |

~ 100

FIGURE 21

[Fig 22]

| H | | Mu | Md | 53-1 | 53-2 |
|---|---|---|---|---|---|
| 12:00 | C1 | 50 | 10 | | |
| 12:10 | C2 | 60 | 20 | | |
| 12:20 | C3 | 70 | 30 | | |
| 12:30 | C4 | 80 | 40 | | 40 |
| 12:44 | C5 | 54 | 54 | | |
| 12:54 | C6 | 64 | 64 | | |

~ 100

FIGURE 22

[Fig 23]

| H | | Mu | Md | 53-1 | 53-2 |
|---|---|---|---|---|---|
| 12:00 | C1 | 50 | 0 | | |
| 12:10 | C2 | 60 | 0 | 20 | |
| 12:19 | C3 | 49 | 9 | | |
| 12:30 | C4 | 60 | 20 | | 40 |
| 12:44 | C5 | 34 | 34 | | |
| 12:54 | C6 | 44 | 44 | | |

↙ 100

FIGURE 23

[Fig 24]

| H | | Mu | Md | 53-1 | 53-2 |
|---|---|---|---|---|---|
| 12:00 | C1 | 50 | 0 | | |
| 12:10 | C2 | 60 | 0 | 20 | |
| 12:19 | C3 | 49 | 9 | | |
| 12:30 | C4 | 60 | 20 | | 40 |
| 12:44 | C5 | 34 | 34 | | |
| 12:54 | C6 | 44 | 24 | 20 | |

↙ 100

FIGURE 24

[Fig 25]

| H | | Mu | Md | 53-1 | 53-2 |
|---|---|---|---|---|---|
| 12:00 | C1 | 50 | 0 | | |
| 12:10 | C2 | 60 | 0 | | |
| 12:20 | C3 | 70 | 0 | | |
| 12:30 | C4 | 80 | 0 | | |
| 12:40 | C5 | 90 | 0 | | 90 |
| 12:47 | C6 | 7 | 7 | | |

~ 100

FIGURE 25

[Fig 26]

| H | | Mu | Md | 53-1 | 53-2 |
|---|---|---|---|---|---|
| 12:00 | C1a | 50 | 30 | 30 | |
| 12:05 | C1b | | | | |
| 12:10 | C2 | 30 | 40 | | |
| 12:20 | C3 | 40 | 50 | | |
| 12:30 | C4 | 50 | 60 | | |
| 12:40 | C5 | 60 | 70 | | |
| 12:50 | C6 | 70 | 80 | | |

~ 100

FIGURE 26

[Fig 27]

| H | | Mu | Md | 53-1 | 53-2 |
|---|---|---|---|---|---|
| 12:00 | C1a | | | 30 | |
| 12:05 | C1b | 50 | 30 | 30 | |
| 12:10 | C2 | 0 | 10 | | |
| 12:20 | C3 | 10 | 20 | | |
| 12:30 | C4 | 20 | 30 | | |
| 12:40 | C5 | 30 | 40 | | |
| 12:50 | C6 | 40 | 50 | | |

~ 100

FIGURE 27

[Fig 28]

| H | | Mu | Md | 53-1 | 53-2 |
|---|---|---|---|---|---|
| 12:00 | C1a | | | 30 | |
| 12:05 | C1b | 50 | 30 | 30 | |
| 12:10 | C2 | 0 | 10 | | |
| 12:20 | C3 | 10 | 20 | | |
| 12:30 | C4 | 20 | 30 | | |
| 12:40 | C5a | | | 20 | |
| 12:45 | C5b | 10 | 20 | | |
| 12:50 | C6 | 20 | 30 | | |

~ 100

FIGURE 28

[Fig 29]

```
┌ ─ ─ ─ ─ ─ ─ ─ ─ ─ ─ ─ ─ ─ ─ ─ ─ ─ ┐
│               Ms                  │  ⟋ E1
└ ─ ─ ─ ─ ─ ─ ─ ─ ─ ─ ─ ─ ─ ─ ─ ─ ─ ┘
                  │
                  ▼
┌───────────────────────────────────┐
│               Mu                  │  ⟋ E2
└───────────────────────────────────┘
                  │
                  ▼
┌───────────────────────────────────┐
│         10-1, 10-2, 10-3          │  ⟋ E3
└───────────────────────────────────┘
                  │
                  ▼
┌───────────────────────────────────┐
│               100                 │  ⟋ E4
└───────────────────────────────────┘
                  │
                  ▼
┌───────────────────────────────────┐
│   C1, C2, C3, C4, C5, C6 + Mr     │  ⟋ E5
└───────────────────────────────────┘
                  │
                  ▼
┌───────────────────────────────────┐
│                54                 │  ⟋ E6
└───────────────────────────────────┘
                  │
                  ▼
┌───────────────────────────────────┐
│               Md                  │  ⟋ E7
└───────────────────────────────────┘
                  │
                  ▼
┌───────────────────────────────────┐
│          53-1, 53-2               │  ⟋ E8
└───────────────────────────────────┘
```

FIGURE 29

# EP 4 030 362 A1

Europäisches
Patentamt

European
Patent Office

Office européen
des brevets

## RAPPORT DE RECHERCHE EUROPEENNE

**Numéro de la demande**

EP 22 15 0468

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | Kagiri Charles ET AL: "Optimized response to electricity time-of-use tariff of a compressed natural gas fuelling station", , 1 juillet 2018 (2018-07-01), pages 1-28, XP055849526, Extrait de l'Internet: URL:https://repository.up.ac.za/bitstream/handle/2263/64719/Kagiri_Optimized_2018.pdf?sequence=1&isAllowed=y [extrait le 2021-10-08] * abrégé; figures 1-8 * * pages 5-8 * * pages 13-15 * * pages 22-24 * ----- | 1-10 | INV. G06Q10/02 G06Q10/06 G06Q50/06 F17C5/00 |
| X | Anonymous: "stations-service Gnv à paris", , 1 septembre 2017 (2017-09-01), pages 1-14, XP055849302, Extrait de l'Internet: URL:https://www.apur.org/sites/default/files/documents/publication/etudes/gnv_paris.pdf [extrait le 2021-10-08] * pages 6-10 * * pages 17,19,20 * ----- -/-- | 1-10 | DOMAINES TECHNIQUES RECHERCHES (IPC) G06Q F17C |

Le présent rapport a été établi pour toutes les revendications

| Lieu de la recherche | Date d'achèvement de la recherche | Examinateur |
|---|---|---|
| Munich | 26 avril 2022 | Bauer, Rodolphe |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
 
& : membre de la même famille, document correspondant

EPO FORM 1503 03.82 (P04C02)

Europäisches
Patentamt

European
Patent Office

Office européen
des brevets

# RAPPORT DE RECHERCHE EUROPEENNE

Numéro de la demande

**EP 22 15 0468**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | Anonymous: "GAZ NATUREL VéHICULE – Comment porter un projet de station ouverte au public ?", , 20 octobre 2016 (2016-10-20), pages 1-7, XP055850234, Extrait de l'Internet: URL:https://www.grdf.fr/documents/10184/31 00831/Gaz-naturel-vehicule-comment-porter-un-projet-de-station-ouverte-au-public/6cb cb300-1318-43c4-80ad-831f6c2bd16f [extrait le 2021-10-12] * pages 29,30 * * pages 82,84 * ----- | 1-10 | |
| X | KAGIRI CHARLES ET AL: "Receding Horizon Operation Control of a Compressed Natural Gas Station", ENERGY PROCEDIA, vol. 158, 22 août 2018 (2018-08-22), – 25 août 2018 (2018-08-25), pages 2853-2858, XP085635138, ISSN: 1876-6102, DOI: 10.1016/J.EGYPRO.2019.02.049 * abrégé; figures 1-5 * * page 2855 – page 2857 * ----- | 1-10 | DOMAINES TECHNIQUES RECHERCHES (IPC) |
| X | Anonymous: "Le fonctionnement d'une station GNC", , 27 octobre 2020 (2020-10-27), pages 1-4, XP055849361, Extrait de l'Internet: URL:https://web.archive.org/web/2020102712 1149/https://www.gaz-mobilite.fr/dossiers/ fonctionnement-station-gnc-gnv/ [extrait le 2021-10-08] * pages 1-3 * ----- | 1-10 | |

-/--

Le présent rapport a été établi pour toutes les revendications

| Lieu de la recherche | Date d'achèvement de la recherche | Examinateur |
|---|---|---|
| Munich | 26 avril 2022 | Bauer, Rodolphe |

Europäisches
Patentamt

European
Patent Office

Office européen
des brevets

**RAPPORT DE RECHERCHE EUROPEENNE**

Numéro de la demande

**EP 22 15 0468**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | Anonymous: "MGL opens CNG filling stations at Tardeo, Sion", The Hindu, 14 décembre 2018 (2018-12-14), pages 1-1, XP055850236, Extrait de l'Internet: URL:https://www.thehindu.com/news/cities/mumbai/mgl-opens-cng-filling-stations-at-tardeo-sion/article25737406.ece [extrait le 2021-10-12] * le document en entier * ----- | 1-10 | |
| A | ORCIONI SIMONE ET AL: "EV Smart Charging with Advance Reservation Extension to the OCPP Standard", ENERGIES, vol. 13, no. 12, 24 juin 2020 (2020-06-24), page 3263, XP055850836, DOI: 10.3390/en13123263 * abrégé; figures 1,4,5,6 * * pages 2-6 * ----- | 1-10 | |

**DOMAINES TECHNIQUES RECHERCHES (IPC)**

Le présent rapport a été établi pour toutes les revendications

| Lieu de la recherche | Date d'achèvement de la recherche | Examinateur |
|---|---|---|
| Munich | 26 avril 2022 | Bauer, Rodolphe |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
...................................................................
& : membre de la même famille, document correspondant

EPO FORM 1503 03.82 (P04C02)